# EUROPEAN PATENT APPLICATION

(11) **EP 4 625 839 A1**
(43) Date of publication of application: **01.10.2025**
(21) Application number: 23931234.1
(22) Date of filing: 03.04.2023
(51) Int. Cl.: H04B 7/155

(54) **COMMUNICATION METHODS, AND DEVICES**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); GUO, Yali, Dongguan, Guangdong 523860 (CN); YANG, Haorui, Dongguan, Guangdong 523860 (CN)
(74) Representative: Novagraaf Technologies
(86) International application number: PCT/CN2023/086039
(87) International publication number: WO 2024/207158

(57) **Abstract**

The present application relates to communication methods, devices, a computer-readable storage medium, a computer program product, and a computer program. A method comprises: a relay device receives a first message sent by a first device, the first message being used for requesting a connectiong with a second device; and the relay device sends a second message to the second device, the second message being used for requesting sharing of a first connection to transmit data between the first device and the second device, or the second message being used for requesting establishment of a second connection between the relay device and the second device to transmit the data between the first device and the second device.

## Description

### TECHNICAL FIELD

The present disclosure relates to the field of communications, and more specifically, to a communication method, and a device, a computer-readable storage medium, a computer program product, and a computer program thereof.

### RELATED ART

In related arts, when two user equipments (UEs) with proximity-based services (ProSe) capabilities are far from each other and fail to directly communicate with each other, the two UEs may be relayed over a relay UE with the ProSe capabilities. That is, the two UEs with the ProSe capabilities are referred to as an initiating UE and a target UE, and the initiating UE and the target UE are capable of exchanging data over the relay UE.

When a quantity of initiating UEs and/or target UEs that communicate with each other over the relay UE increases, a quantity of links also increases, which increases processing complexity of the relay UE. Moreover, due to that only a limited quantity of links can be processed by the relay UE, a quantity of initiating UEs and/or target UEs that can communicate with each other over the relay UE is also limited. Therefore, how to share an existing link between the relay UE and the initiating UEs and/or the target UEs is a problem to be addressed.

### SUMMARY

Embodiments of the present disclosure provide a communication method, and a device, a computer-readable storage medium, a computer program product, and a computer program thereof.

The embodiments of the present disclosure provide a communication method. The method is performed by a relay device and includes: receiving a first message from a first device, wherein the first message is used to request a connection between the first device and a second device; and transmitting a second message to the second device, wherein the second message is used to request to share a first connection to transmit data between the first device and the second device, or the second message is used to request to establish a second connection between the relay device and the second device to transmit data between the first device and the second device.

The embodiments of the present disclosure provide a communication method. The mthod is performed by a first device and includes: transmitting a first message to a relay device, wherein the first message is used to request a connection between the first device and a second device, and the first message is used to trigger the relay device to transmit a second message to the second device, wherein the second message is used to request to share a first connection to transmit data between the first device and the second device, or the second message is used to request to establish a second connection between the relay device and the second device to transmit data between the first device and the second device.

The embodiments of the present disclosure provide a communication method. The method is performed by a second device and includes: receiving a second message from a relay device, wherein the second message is used to request to share a first connection to transmit data between a first device and the second device, or the second message is used to request to establish a second connection between the relay device and the second device to transmit data between a first device and the second device.

The embodiments of the present disclosure provide a relay device. The relay device includes: a first communication unit configured to: receive a first message from a first device, wherein the first message is used to request a connection between a first device and a second device; and transmit a second message to the second device, wherein the second message is used to request to share a first connection to transmit data between the first device and the second device, or the second message is used to request to establish a second connection between the relay device and the second device to transmit data between the first device and the second device.

The embodiments of the present disclosure provide a first device. The first device includes: a second communication unit configured to transmit a first message to a relay device, wherein the first message is used to request a connection between the first device and a second device, and the first message is used to trigger the relay device to transmit a second message to the second device, wherein the second message is used to request to share a first connection to transmit data between the first device and the second device, or the second message is used to request to establish a second connection between the relay device and the second device to transmit data between the first device and the second device.

The embodiments of the present disclosure provide a second device. The second device includes: a third communication unit configured to receive a second message from a relay device, wherein the second message is used to request to share a first connection to transmit data between a first device and the second device, or the second message is used to request to establish a second connection between the relay device and the second device to transmit data between a first device and the second device.

The embodiments of the present disclosure provide a relay device. The relay device include a transceiver, a processor, and a memory. The memory is configured to store a computer program. The processor is configured to invoke and run the computer program stored in the memory, to cause the relay device to perform the communication method.

The embodiments of the present disclosure provide a first device. The first device includes a transceiver, a processor, and a memory. The memory is configured to store a computer program. The processor is configured to invoke and run the computer program stored in the memory, to cause the first device to perform the communication method.

The embodiments of the present disclosure provide a second device. The second device includs a transceiver, a processor, and a memory, wherein the memory is configured to store a computer program, and the processor is configured to invoke and run the computer program stored in the memory, to cause the second device to perform the communication method.

The embodiments of the present disclosure provide a chip configured to perform the communication method.

Specifically, the chip includes a processor configured to invoke and run a computer program in a memory, to cause a device equipped with the chip to perform the communication method.

The embodiments of the present disclosure provide a computer-readable storage medium configured to store a computer program. When the computer program is run by a device, the device is caused to perform the communication method.

The embodiments of the present disclosure provide a computer program product, including one or more computer program instructions. The one or more computer program instructions cause a computer to perform the foregoing communication method.

The embodiments of the present disclosure provide a computer program. When the computer program runs on a computer, the computer is caused to perform the communication method.

It can be seen that according to the above solutions, when the first device needs to connect to the second device over the relay device, the relay device can determine whether to request to share an existing connection between the relay device and the second device. In this way, the existing connection between the relay device and the second device can be shared by the relay device to serve a plurality of initiating devices, such that link utilization efficiency between the relay device and the second device is improved.

### BRIEF DESCRIPTION OF DRAWINGS

FIG. 1 is a schematic diagram of an application scenario according to some embodiments of the present disclosure;
FIG. 2 is an architecture diagram of a 5th Generation Mobile Communication Technology (5G) system according to some embodiments of the present disclosure;
FIG. 3 is a schematic flowchart of a communication method according to some embodiments of the present disclosure;
FIG. 4 is a schematic flowchart of a communication method according to some other embodiments of the present disclosure;
FIG. 5 is a schematic flowchart of a communication method according to some other embodiments of the present disclosure;
FIG. 6A and FIG. 6B are schematic diagrams of a plurality of example procedures of a communication method according to some embodiments of the present disclosure;
FIG. 7A and FIG. 7B are schematic diagrams of a plurality of example procedures of a communication method according to some other embodiments of the present disclosure;
FIG. 8 is a schematic diagram of a processing procedure for establishing a short-range link in related technologies;
FIG. 9 and FIG. 10 are schematic diagrams of a plurality of scenarios of establishing a connection between an initiating UE and a target UE over a relay UE in related technologies;
FIG. 11 is a schematic flowchart of connecting an initiating UE to a target UE over a relay UE;
FIG. 12 is a schematic block diagram of a relay device according to some embodiments of the present disclosure;
FIG. 13 is a schematic block diagram of a relay device according to some other embodiments of the present disclosure;
FIG. 14 is a schematic block diagram of a first device according to some embodiments of the present disclosure;
FIG. 15 is a schematic block diagram of a first device according to some other embodiments of the present disclosure;
FIG. 16 is a schematic block diagram of a second device according to some embodiments of the present disclosure;
FIG. 17 is a schematic block diagram of a second device according to some other embodiments of the present disclosure;
FIG. 18 is a schematic block diagram of a communication device according to some embodiments of the present disclosure;
FIG. 19 is a schematic block diagram of a chip according to some embodiments of the present disclosure; and
FIG. 20 is a schematic block diagram of a communication system according to some embodiments of the present disclosure.

### DETAILED DESCRIPTION

The technical solutions according to the embodiments of the present disclosure are described hereinafter in conjunction with the accompanying drawings according to the embodiments of the present disclosure.

The technical solutions of the embodiments of the disclosure are applied to various communication systems, such as a global system of mobile communication (GSM) system, a code division multiple access (CDMA) system, a wideband code division multiple access (WCDMA) system, a general packet radio service (GPRS), a long-term Evolution (LTE) system, an advanced long-term evolution (LTE-A) system, a new radio (NR) system, an NR evolution system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (Wi-Fi) system, a 5th Generation (5G) system, or other communication systems.

Typically, traditional communication systems support a limited number of connections and are easy to implement. However, with development of communication technologies, mobile communication systems will support not only conventional communications, but also, for example, device-to-device (D2D) communications, machine-to-machine (M2M) communications, machine type communications (MTCs), vehicle-to-vehicle (V2V) communications, or vehicle-to-everything (V2X) communications. The embodiments of the present disclosure are also applicable to these communication systems.

In some embodiments, the communication systems in the embodiments of the present disclosure are applicable to a carrier aggregation (CA) scenario, a dual connectivity (DC) scenario, or a standalone (SA) networking scenario.

In some embodiments, the communication system according to the embodiments of the present disclosure is applicable to an unlicensed spectrum, wherein the unlicensed spectrum is considered as a shared spectrum; or the communication system according to the embodiments of the present disclosure is applicable to a licensed spectrum, wherein the licensed spectrum is considered as an unshared spectrum.

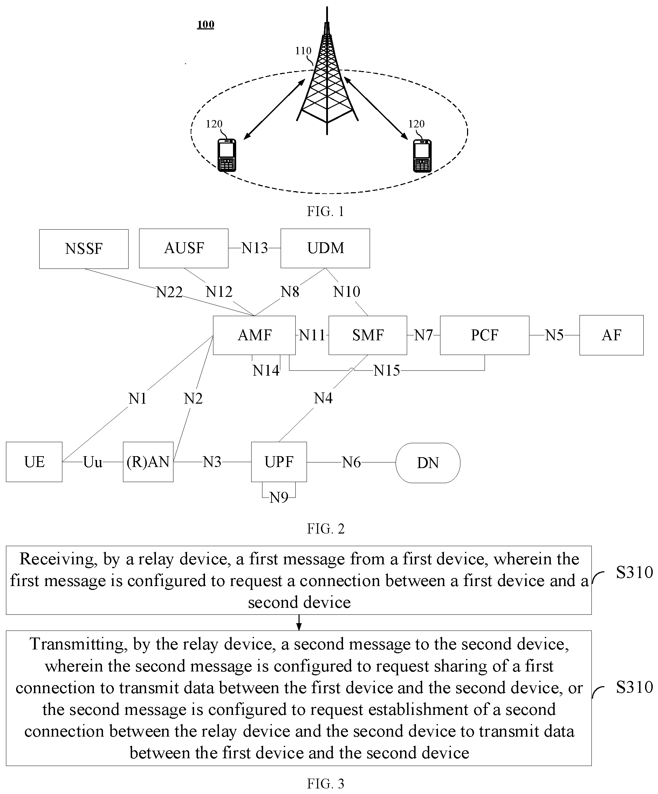

FIG. 1 illustrates a communication system 100 as an example. The communication system includes a network device 110 and two terminal devices 120. In some embodiments, the communication system 100 includes a plurality of network devices 110, and a coverage area of each of the network devices 110 includes other numbers of terminal devices 120, which are not limited in the embodiments of the present disclosure.

In some embodiments, the communication system 100 further includes other network entities such as a mobility management entity (MME) and an access and mobility management function (AMF), which is not limited in the embodiments of the disclosure.

The terminal device may also be referred to as a user equipment (UE), an access terminal, a subscriber unit, a subscriber station, a mobile terminal, a mobile station, a remote station, a remote terminal, a mobile device, a user terminal, a terminal, a wireless communication device, a user agent, or a user device. The terminal device is a station (ST) in a WLAN, or a cellular phone, a cordless phone, a Session Initiation Protocol (SIP) phone, a wireless local loop (WLL) station, a personal digital assistant (PDA) device, a handheld device with a wireless communication function, a computing device, or another processing device connected to a wireless modem, an in-vehicle device, a wearable device, a terminal device in a next generation communication system, such as an NR network, or a terminal device in an evolved public land mobile network (PLMN), or the like.

In some embodiments of the present disclosure, the terminal device is deployed on the land, for example, indoors or outdoors, handheld, wearable, or in vehicles; or deployed on water (for example, on a ship); or the terminal device is deployed in air (for example, on an airplane, a balloon, or a satellite). In some embodiments of the present disclosure, the terminal device is a mobile phone, a pad, a computer with a wireless transceiver function, a virtual reality (VR) terminal device, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, or the like.

By way of example but not limitation, in the embodiments of the present disclosure, the terminal device is a wearable device. The wearable device is also referred to as a wearable smart device, which is a generic term for wearable devices, such as glasses, gloves, watches, clothing, and shoes, which are intelligently designed and developed for daily wear by using wearable technologies. The wearable device is a portable device that is directly worn on the body or integrated into the clothing or accessories of the user. The wearable device is not only a hardware device, but also achieves powerful functions through software support as well as data interaction and cloud interaction. The wearable smart device in a broad sense includes devices such as smart watches or smart glasses that have full functionality and large size, and are capable of implementing all or part of functionality without depending on the smart phone, and devices such as various types of smart bracelets and smart jewelries for monitoring physical signs, which are dedicated to a specific type of application functions and need to be used in cooperation with other devices such as the smart phone.

The network devices further include an access network device and a core network device. That is, the wireless communication system further includes a plurality of core networks for communicating with the access network device. The access network device is an evolutional Node B (eNB or e-NodeB), a macro Node B, a micro Node B (also known as "small node B"), a micro-micro Node B, an AP, a transmission point (TP), or a next-generation Node B (gNodeB) in an LTE system, an NR system, or an authorized auxiliary access long-term evolution (LAA-LTE) system.

In some embodiments of the present disclosure, the network device is a device for communication with a mobile device, and the network device is an access point (AP) in a WLAN, a base transceiver station (BTS) in a GSM or a CDMA, a NodeB (NB) in a WCDMA, or an evolutional Node B (eNB, or eNodeB) in the LTE network, a relay station, an access point, an in-vehicle device, a wearable device, a network device (gNB) in an NR network, a network device in a future evolved PLMN network, or a network device in an NTN network.

By way of example but not limitation, in the embodiments of the present disclosure, the network device has mobile characteristics. For example, the network device is a mobile device. In some embodiments, the network device is a satellite, or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is a base station installed in locations such as land and water.

In some embodiments of the present disclosure, the network device provides services for cells, and the terminal device communicates with the network device over transmission resources (e.g., frequency domain resources or frequency spectrum resources) used by the cell, which is a cell corresponding to the network device (e.g., a base station). The cell is a base station corresponding to a macro base station or a small cell. The small cell herein includes a metro cell, a micro cell, a pico cell, or a femto cell. The small cells are characterized by a small coverage area and low transmission power, which are suitable for providing high-speed data transmission services.

It is understandable that a device having communication functions in networks/systems according to the embodiments of the present disclosure is referred to as a communication device. Taking the communication system illustrated in FIG. 1 as an example, the communication devices include a network device and a terminal device having a communication function, wherein the network device and the terminal device are specific devices according to the embodiments of the present disclosure, which are not repeated herein. The communication device further includes other devices in the communication system, such as a network controller or a mobile management entity, which are not limited in the embodiments of the present disclosure.

To facilitate understanding of the embodiments of the present disclosure, the basic processes and concepts involved in the embodiments of the present disclosure are briefly described below. It is understandable that the basic processes and concepts introduced below do not constitute any limitations to the embodiments of the present disclosure.

A system architecture of a 5G network is illustrated in FIG. 2. The system architecture involves: a network slice selection function (NSSF), an authentication server function (AUSF), a unified data management (UDM), an access and mobility management function (AMF), a session management function (SMF), a policy control function (PCF), an AF, a user plane function (UPF), and a data network (DN). The NSSF is mainly responsible for management of network slicing related information, e.g., responsible for selecting a network slice for a terminal device. The AUSF is responsible for implementing an identity authentication function of user access. The UDM is responsible for managing and storing subscription data and authentication data. The AMF responsible for mobility management, security anchor point and security context management or the like; and in addition to performing the mobility management on a UE, the AFM is also responsible for forwarding session management related information between the UE and the SMF. The SMF is responsible for session management, UE IP address allocation and management, or the like. The PCF is responsible for developing policies related to the mobility management, session management, charging, and the like for the UE. The AF is applicable to an external application server. The UPF is responsible for complex user plane processing, e.g., forwarding traffic or reporting traffic usage between a radio access network (RAN) and the Internet, implementing policy of quality of service (QoS) or the like. The DN is a 5G core network (5GC) external data network (e.g., the Internet).

Additionally, data is transmitted over corresponding interfaces between various nodes of the 5GC, between the UE and the nodes of the 5GC, between the UE and the RAN, and between the RAN and the nodes of the 5GC. For example, as illustrated in FIG. 2, in the 5GC, the AMF transmits data with the NSSF over an N22 interface; data transmission is carried out between the AMF and the SMF over an N11 interface, data transmission is carried out between the AMF and the AUSF over an N12 interface, and data transmission is carried out between the AMF and the UDM over an N8 interface. Data transmission is carried out between the SMF and the UPF over an N4 interface; data transmission is carried out between the UPF and an external data network over an N6 interface and between the UPF and the AN over an N3 interface. The UE establishes an access stratum (AS) connection to the AN over a Uu interface to implement interaction of access stratum messages and wireless data transmission. The UE establishes a non-access stratum (NAS) connection to the AMF over an N1 interface to implement interaction of NAS messages. The RAN transmits data with the AMF over an N2 interface, and the RAN transmits data with UPF over an N3 interface. It is understandable that only part of the interfaces between the nodes are described, and other interfaces between the nodes in the 5GC in FIG. 2 are not described in detail.

It should be understood that the terms "system" and "network" are often used interchangeably herein. The term "and/or" herein is merely a way to describe an association relationship between associated objects, indicating that there are three possible relationships. For example, the phrase "A and/or B" means (A), (B), or (A and B). In addition, the symbol "/" herein generally indicates an "or" relationship between the associated objects.

It should be understood that the term "indicate" in the embodiments of the present disclosure is a direct indication, an indirect indication, or an indication that there is an associated relationship. For example, the phrase "A indicating B" means that A indicates B directly, e.g., B is acquired by A; or that A indicates B indirectly, e.g., A indicates C by which B may be acquired; or that an association is present between A and B.

In the description of the embodiments of the present disclosure, the term "correspond" may indicate a direct or an indirect correspondence relationship between two objects, an association relationship between two objects, a relationship of indicating and being indicated, configuring and being configured, or the like.

For ease of understanding of the technical solutions according to the embodiments of the present disclosure, the relevant technologies of the embodiments of the present disclosure are described hereinafter, and the following relevant technologies may be combined with the technical solutions of the embodiments of the present disclosure in any combination as an optional option, and all of them shall fall within the protection scope of the embodiments of the present disclosure.

FIG. 3 is a schematic flowchart of a communication method according to some embodiments of the present disclosure. The communication method includes at least part of following content.

In S310, a relay device receives a first message from a first device. The first message is used to request a connection between a first device and a second device.

In S320, the relay device transmits a second message to the second device. The second message is used to request to share a first connection to transmit data between the first device and the second device, or the second message is used to request to establish a second connection between the relay device and the second device to transmit data between the first device and the second device.

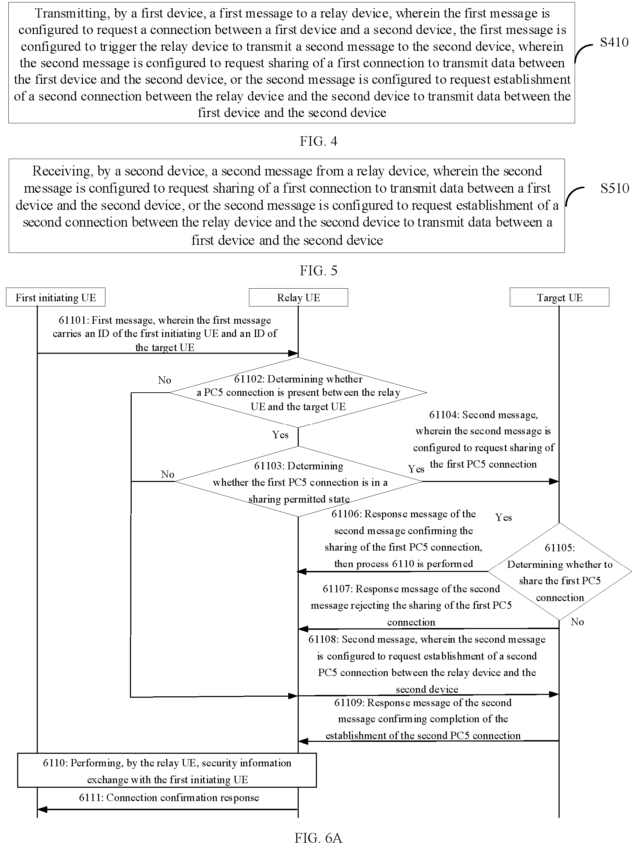

FIG. 4 is a schematic flowchart of a communication method according to some other embodiments of the present disclosure. The communication method includes at least part of following content.

In S410, a first device transmits a first message to a relay device. The first message is used to request a connection between a first device and a second device, and the first message is used to trigger the relay device to transmit a second message to the second device. The second message is used to request to share a first connection to transmit data between the first device and the second device, or the second message is used to request to establish a second connection between the relay device and the second device to transmit data between the first device and the second device.

FIG. 5 is a schematic flowchart of a communication method according to some other embodiments of the present disclosure. The communication method includes at least part of following content.

In S510, a second device receives a second message from a relay device. The second message is used to request to share a first connection to transmit data between a first device and the second device, or the second message is used to request to establish a second connection between the relay device and the second device to transmit data between the first device and the second device.

Herein, the first device, the relay device, and the second device may all be terminal devices. The first device may also be referred to as a first initiating device, the second device may be referred to as a target device, and the relay device may also be referred to as a forwarding device.

All connections mentioned in the embodiments of the present disclosure are connections of a PC5 interface. A connection of the PC5 interface may be referred to as a PC5 connection, a PC5 link, or the like. Possible names of the connections in the embodiments are not elaborated herein.

In some embodiments, the first message may be a direct communication request message.

Prior to transmitting the first message to the relay device, the first device may first select the relay device from a plurality of candidate relay devices. Whether a PC5 connection is already present between the first device and the relay device is not limited in the embodiments.

The first message is used to request a connection between the first device and the second device, and the first message is used to request to establish a connection to the relay device. Specifically, the first message being used to request to establish the connection to the relay device may mean that the first message is further used to request to establish a fourth connection between the first device and the relay device.

In some embodiments, the first message may carry an identifier (ID) of the first device and an ID of the second device. The ID may be at least one of an application layer ID or a link layer ID. The link layer ID may also be referred to as a Layer 2 ID (L2 ID).

In some embodiments, in addition to carrying the ID of the first device and the ID of the second device, the first message may also carry information of a target service. Specifically, the information of the target service may include at least one of: an application ID of the target service and a type of the target service. In addition, the information of the target service may also include a relay service code (RSC) corresponding to the target service. A method for configuring or determining a corresponding relationship between the target service and the RSC is not limited in the embodiments.

In some embodiments, the relay device transmitting the second message to the second device includes: the relay device transmitting the second message to the second device in a case where the first connection is present between the relay device and the second device and the first connection is in a shareable state, wherein the second message is used to request to share the first connection to transmit the data between the first device and the second device.

The relay device transmitting the second message to the second device includes: the relay device transmitting the second message to the second device in a case where the first connection is present between the relay device and the second device and the first connection is in a non-shareable state, wherein the second message is used to request to establish the second connection between the relay device and the second device to transmit the data between the first device and the second device.

In a case where the relay device receives the first message from the first device, the communication method further includes: transmitting, by the relay device, the second message to the second device in a case where no connection is present between the relay device and the second device, wherein the second message is used to request to establish the second connection between the relay device and the second device to transmit the data between the first device and the second device.

That is, the second message may be configured to request to share the first connection to transmit the data between the first device and the second device. In the following description, this second message will be referred to as a second message used to request to share the first connection. Alternatively, the second message may be configured to request to establish the second connection between the relay device and the second device to transmit the data between the first device and the second device. In the following description, this second message will be referred to as a second message used to request to establish the second connection between the relay device and the second device.

A manner in which the relay device determines whether the first connection is in the shareable state may include: determining, by the relay device based on first state indication information of the first connection, whether the first connection is in the shareable state.

Description is separately provided based on two scenarios: the first message does not carry the information of the target service, and the first message carries the information of the target service.

In one scenario, the first message does not carry the information of the target service.

Subsequent to receiving the first message from the first device, the relay device may first determine whether a connection is present between the relay device and the second device. In a case where no connection is present between the relay device and the second device, the relay device transmits the second message used to request to establish the second connection between the relay device and the second device to the second device. In a case where one connection is present between the relay device and the second device, the relay device uses the one connection as the first connection between the relay device and the second device. Based on the first state indication information of the first connection, the relay device determines whether the first connection is in the shareable state; and transmits the second message used to request to share the first connection to the second device in a case where the first connection is in the shareable state, or transmits the second message used to request to establish the second connection between the relay device and the second device to the second device in a case where the first connection is in the non-shareable state. Alternatively, in a case where a plurality of connections are present between the relay device and the second device, the relay device uses any one of the plurality of connections used as the first connection. Based on the first state indication information of the first connection, the relay device determines whether the first connection is in the shareable state. In a case where the first connection is in the shareable state, the second message used to request to share the first connection is transmitted to the second device. In a case where the first connection is in the non-shareable state and the determination is completed for all the connections, the second message used to request to establish the second connection between the relay device and the second device is transmitted to the second device. In a case where the first connection is in the non-shareable state and a remaining connection for which the determination is not performed is present, any one remaining connection is selected as a new first connection to continue the determination.

The above method used by the relay device to determine whether a connection is present between the relay device and the second device may include: acquiring, by the relay device, the ID of the second device from the first message, and determining, by the relay device based on the ID of the second device, whether a connection is present between the relay device and the second device. Determining, by the relay device based on the ID of the second device, whether the connection is present between the relay device and the second device may include: determining, by the relay device based on the ID of the second device and connection related information of the relay device, whether the connection is present between the relay device and the second device, wherein the connection related information of the relay device may include information about whether a connection is present between the relay device and each candidate target device in at least one candidate target device.

Determining, by the relay device based on the first state indication information of the first connection, whether the first connection is in the shareable state includes one of following operations: determining that the first connection is in the shareable state in a case where the first state indication information of the first connection includes an indication that the first connection accepts sharing; determining that the first connection is in the shareable state in a case where the first state indication information of the first connection includes a maximum quantity of initiating devices capable of sharing the first connection, and a current quantity of initiating devices that have already shared the first connection is less than the maximum quantity; determining that the first connection is in the shareable state in a case where the first state indication information of the first connection includes an indication that a quantity of initiating devices that have already shared the first connection does not reach the maximum quantity; or determining that the first connection is in the shareable state in a case where the first state indication information of the first connection includes a first remaining quantity of initiating devices capable of sharing the first connection, and the first remaining quantity is not zero.

Alternatively, determining, by the relay device based on the first state indication information of the first connection, whether the first connection is in the shareable state includes one of following operations: determining that the first connection is in the non-shareable state in a case where the first state indication information of the first connection includes an indication that the first connection does not accept sharing; determining that the first connection is in the non-shareable state in a case where the first state indication information of the first connection includes a maximum quantity of initiating devices capable of sharing the first connection, and a current quantity of initiating devices that have already shared the first connection reaches the maximum quantity; determining that the first connection is in the non-shareable state in a case where the first state indication information of the first connection includes an indication that a quantity of initiating devices that have already shared the first connection reaches a maximum quantity; or determining that the first connection is in the non-shareable state in a case where the first state indication information of the first connection includes a first remaining quantity of initiating devices capable of sharing the first connection, and the first remaining quantity is zero.

Herein, the first state indication information of the first connection may be transmitted by the second device to the relay device when the relay device and the second device established or shared the first connection last time. The first state indication information of the first connection may include at least one of: an indication of whether the first connection accepts sharing; a maximum quantity of initiating devices capable of sharing the first connection; an indication of whether a quantity of initiating devices that have already shared the first connection reaches a maximum quantity; or a first remaining quantity of initiating devices capable of sharing the first connection.

In some embodiments, the first state indication information of the first connection includes an indication of whether the first connection accepts sharing.

The indication of whether the first connection accepts sharing may be an indication that state indication information of the first connection is the same each time. That is, the first connection does not limit a maximum quantity of initiating devices sharing the first connection and keeps sharing accepted, or the first connection cannot be shared and keeps sharing unaccepted. Whether the first connection keeps sharing accepted may be determined by the second device based on configuration information or a situation of the second device, which is not limited in the embodiments.

Alternatively, the indication of whether the first connection accepts sharing may be determined by the second device based on an actual situation each time the state indication information of the first connection is transmitted. For example, in a case where the second device determines to share the first connection last time, the second device determines that the first connection cannot accept sharing next time. When transmitting previous state indication information of the first connection, the second device sets the indication of whether the first connection accepts sharing to indicate that the first connection may not accept sharing next time. For example, in a case where the second device determines to establish the first connection last time, the second device determines that the first connection can accept sharing next time. When transmitting the previous state indication information of the first connection, the second device sets the indication of whether the first connection accepts sharing to indicate that the first connection accepts sharing next time. The second device may determine, based on a maximum quantity of initiating devices sharing the first connection, whether to accept sharing next time, or the second device may determine, based on other configuration information, whether to accept sharing next time, or the second device may determine, based on its own resource allocation, whether to accept sharing next time, which is not limited in the embodiments.

The indication of whether the first connection accepts sharing may be represented by an indication value. For example, the indication value of the indication of whether the first connection accepts sharing taking a value of 1 indicates that the first connection accepts sharing. The indication value of the indication of whether the first connection accepts sharing taking a value of 0 indicates that the first connection does not accept sharing; or vice versa. Alternatively, the indication of whether the first connection accepts sharing may be represented by indication content. For example, in a case where the indication content of the indication of whether the first connection accepts sharing is yes, acceptance, or sharing, this indication content indicates that the first connection accepts sharing. In a case where the indication content of the indication of whether the first connection accepts sharing is no, non-acceptance, or non-sharing, this indication content indicates that the first connection does not accept sharing.

Correspondingly, determining, by the relay device based on the first state indication information of the first connection, whether the first connection is in the shareable state may include: determining that the first connection is in the shareable state in a case where the first state indication information of the first connection includes the indication that the first connection accepts sharing; or determining that the first connection is in the non-shareable state in a case where the first state indication information of the first connection comprises the indication that the first connection does not accept sharing.

In some embodiments, the first state indication information of the first connection includes a maximum quantity of initiating device capable of sharing the first connection.

The maximum quantity of initiating device capable of sharing the first connection may be determined by the second device based on a configuration or a situation of the second device, which is not limited in the embodiments. Specifically, the maximum quantity of initiating device capable of sharing the first connection may be a positive integer, such as 10, 5, 2, or a larger or smaller value, which is not be exhausted herein.

Correspondingly, determining, by the relay device based on the first state indication information of the first connection, whether the first connection is in the shareable state may include: acquiring, by the relay device, a current quantity of initiating devices that have already shared the first connection in a case where the first state indication information of the first connection includes the maximum quantity of initiating devices capable of sharing the first connection; determining whether the current quantity of initiating devices that have already shared the first connection is less than the maximum quantity; and determining that the first connection is in the shareable state in a case where the current quantity of initiating devices that have already shared the first connection is less than the maximum quantity; or determining that the first connection is in the non-shareable state in a case where the current quantity of initiating devices that have already shared the first connection is not less than the maximum quantity.

In some embodiments, the first state indication information of the first connection includes an indication of whether a quantity of initiating devices that have already shared the first connection reaches a maximum quantity.

The indication of whether the quantity of initiating devices that have already shared the first connection reaches the maximum quantity may be determined based on the configuration of the second device. For example, processing performed by the second device may include: determining, by the second device, a quantity of initiating devices that have already shared the first connection last time in a case where the second device determines to share or establish the first connection last time; determining whether the quantity of initiating devices that have already shared the first connection last time reaches a maximum quantity of initiating devices capable sharing the first connection; and in a case where the quantity of initiating devices that have already shared the first connection last time reaches the maximum quantity of initiating devices capable of sharing the first connection, adds the indication that the quantity of initiating devices that have already shared the first connection reaches the maximum quantity to the first state indication information of the first connection; or in a case where the quantity of initiating devices that have already shared the first connection last time does not reach the maximum quantity of initiating devices capable of sharing the first connection, adds the indication that the quantity of initiating devices that have already shared the first connection does not reach the maximum quantity to the first state indication information of the first connection.

The indication of whether the quantity of initiating devices that have already shared the first connection reaches the maximum quantity may be represented by an indication value. For example, the indication value of the indication of whether the quantity of initiating devices that have already shared the first connection reaches the maximum quantity taking a value of 1 indicates that the quantity of initiating devices that have already shared the first connection reaches the maximum quantity, or the indication value of the indication of whether the quantity of initiating devices that have already shared the first connection reaches the maximum quantity taking a value of 0 indicates that the quantity of initiating devices that have already shared the first connection does not reach the maximum quantity; or vice versa. Alternatively, the indication of whether the quantity of initiating devices that have already shared the first connection reaches the maximum quantity may be represented by indication content. For example, in a case where the indication content is yes or reaching the maximum quantity, this indication content indicates that the quantity of initiating devices that have already shared the first connection reaches the maximum quantity. In a case where the indication content is no or not reaching the maximum quantity, this indication content indicates that the quantity of initiating devices that have already shared the first connection does not reach the maximum quantity.

Correspondingly, determining, by the relay device based on the first state indication information of the first connection, whether the first connection is in the shareable state may include: determining that the first connection is in the shareable state in a case where the first state indication information of the first connection includes the indication that the quantity of initiating devices that have already shared the first connection does not reach the maximum quantity; or determining that the first connection is in the non-shareable state in a case where the first state indication information of the first connection includes the indication that the quantity of initiating devices that have already shared the first connection reaches the maximum quantity.

In some embodiments, the first state indication information of the first connection includes a first remaining quantity of initiating device capable of sharing the first connection.

The first remaining quantity of initiating devices capable of sharing the first connection may be determined by the second device. For example, the processing performed by the second device may include: determining, by the second device, the quantity of initiating devices that have already shared the first connection in a case where the second device determines to share or establish the first connection last time, and acquiring the first remaining quantity of initiating devices capable of sharing the first connection by subtracting the quantity of initiating devices that have already shared the first connection from the maximum quantity of initiating devices capable of sharing the first connection.

Correspondingly, determining, by the relay device based on the previous state indication information of the first connection, whether the first connection is in the shareable state may include: determining whether the first remaining quantity is zero in a case where the previous state indication information of the first connection includes the first remaining quantity of initiating devices capable of sharing the first connection; and determining that the first connection is in the shareable state in a case where the first remaining quantity is not zero; or determining that the first connection is in the non-shareable state in a case where the first remaining quantity is zero.

It should be understood that the first state indication information of the first connection may include any one of the above four types of content. Alternatively, the first state indication information of the first connection may include at least part of the above four types of content. For example, the first state indication information of the first connection may include the indication of whether the first connection accepts sharing and the first remaining quantity of initiating devices capable of sharing the first connection. In this case, determining, by the relay device based on the first state indication information of the first connection, whether the first connection is in the shareable state may include: in a case where the first state indication information of the first connection includes the indication of whether the first connection accepts sharing and the first remaining quantity of initiating devices capable of sharing the first connection, if the indication of whether the first connection accepts sharing is that sharing can be accepted, determining that the first connection is in the shareable state, and saving the first remaining quantity of initiating devices capable of sharing the first connection, wherein the the first remaining quantity of initiating devices capable of sharing the first connection is used to determine next time, based on second state indication information of the first connection, whether to share the first connection; if the indication of whether the first connection accepts sharing is that sharing cannot be accepted, determining that the first connection is in the non-shareable state, and saving the first remaining quantity of initiating devices capable of sharing the first connection, wherein the first remaining quantity of initiating devices capable of sharing the first connection is used to determine next time, based on the second state indication information of the first connection, whether to share the first connection. This example is only provided for an illustrative purpose. Regarding a way in which the first state indication information of the first connection includes the at least part of the above four types of content, there may be other examples, which are not exhausted herein.

After the relay device determines that the first connection is in the shareable state, the relay device may transmit the second message to the second device to request to share the first connection, so as to transmit the data between the first device and the second device. The transmission of the data between the first device and the second device over the first connection may be that the relay device forwards the data between the first device and the second device over the first connection.

A type of the second message used to request to share the first connection may be a link modification request message. Specifically, the second message is a link modification request message for the first connection. The second message may carry relevant information of the first connection. For example, the relevant information of the first connection may be at least one of a number of the first connection, an ID of the first connection, or configuration information of the first connection.

The second message used to request to share the first connection may carry the ID of the first device. Further, in a case where the first message carries address information of the first device, the second message may also carry the address information of the first device. The address information may be network address information, for example, may be at least one of an Internet Protocol (IP) address, a Medium Access Control (MAC) address, or the like.

The relay device transmits the second message used to request to establish the second connection between the relay device and the second device to the second device in a case where no connection is present between the relay device and the second device or the first connection is present between the relay device and the second device and the first connection is in the non-shareable state. A type of the second message used to request to establish the second connection between the relay device and the second device may be a direct communication request message. The second message used to request to establish the second connection between the relay device and the second device may carry the ID of the first device. Further, the second message used to request to establish the second connection between the relay device and the second device may also carry the address information of the first device.

In another scenario, the first message carries the information of the target service.

In some embodiments, in this scenario, processing performed by the relay device may be the same as that in the previous embodiments, that is, the relay device does not perform the processing at a granularity of the target service. In this manner, the first connection may carry the target service, or the first connection does not carry the target service, and no connection is present between the relay device and the second device to carry the target service. In addition, the second message used to request to share the first connection, or the second message used to request to establish the second connection between the relay device and the second device may or may not carry the information of the target service. Processing performed by the second device, processing performed by the relay device, and processing performed by the first device are the same as those in the above embodiments, which are not elaborated herein for brevity.

In some embodiments, in a case where the first message carries the information of the target service, the relay device performs the processing at the granularity of the target service. In this manner, the first connection carries the target service. In addition, the second message used to request to share the first connection carries the information of the target service, and the second message used to request to share the first connection carries the information of the target service.

Transmitting, by the relay device, the second message to the second device in a case where the first connection is present between the relay device and the second device and the first connection is in the shareable state may include: in a case where a connection is present between the relay device and the second device to carry the target service, determining, by the relay device, the connection as the first connection between the relay device and the second device, determining, based on the first state indication information of the first connection, whether the first connection is in the shareable state, and transmitting the second message used to request to share the first connection to the second device in a case where the first connection is in the shareable state, wherein the second message may carry the information of the target service.

In addition, in a case where the first connection is in the non-shareable state, processing performed by the relay device to transmit the second message used to request to establish the second connection between the relay device and the second device to the second device is the same as that in the above embodiments, except that the second message used to request to establish the second connection between the relay device and the second device carries the information of the target service.

Transmitting, by the relay device, the second message to the second device in a case where no connection is present between the relay device and the second device may include: transmitting, by the relay device, the second message used to request to establish the second connection between the relay device and the second device to the second device in a case where no connection is present between the relay device and the second device; or transmitting, by the relay device, the second message used to request to establish the second connection between the relay device and the second device to the second device in a case where no connection is present between the relay device and the second device to carry the target service, wherein the second message carries the information of the target service.

Specifically, subsequent to receiving the first message from the first device, the relay device may first determine whether a connection is present between the relay device and the second device. In a case where no connection is present between the relay device and the second device, the relay device transmits the second message used to request to establish the second connection between the relay device and the second device to the second device, wherein the second message carries the information of the target service. In a case where at least one connection is present between the relay device and the second device, the relay device determines whether a connection carrying the target service is present in the at least one connection. In a case where no connection carrying the target service is present in the at least one connection, the relay device transmits the second message used to request to establish the second connection between the relay device and the second device to the second device, wherein the second message carries the information of the target service. In a case where the connection carrying the target service is present, the relay device determines the connection as the first connection between the relay device and the second device. Based on the first state indication information of the first connection, the relay device determines whether the first connection is in the shareable state; and transmits the second message to the second device in a case where the first connection is in the shareable state, or transmits the second message used to request to share the first connection to the second device in a case where the first connection is in the non-shareable state. The second message carries the information of the target service.

A manner in which the relay device determines whether the connection is present between the relay device and the second device is the same as that in the above embodiments, which is not elaborated herein for brevity. Determining, by the relay device, whether the connection carrying the target service is present in the at least one connection may include: acquiring, by the relay device, the information of the target service from the first message, and determining, based on the information of the target service, whether the connection carrying the target service is present in the at least one connection.

Determining, by the relay device based on the first state indication information of the first connection, whether the first connection is in the shareable state includes one of following operations: determining that the first connection is in the shareable state in a case where the first state indication information of the first connection includes an indication that the target service carried by the first connection accepts sharing; determining that the first connection is in the shareable state in a case where the first state indication information of the first connection includes a maximum quantity of initiating devices capable of sharing the target service carried by the first connection, and a current quantity of initiating devices that have already shared the target service carried by the first connection is less than the maximum quantity; determining that the first connection is in the shareable state in a case where the first state indication information of the first connection includes an indication that a quantity of initiating devices that have already shared the target service carried by the first connection does not reach the maximum quantity; or determining that the first connection is in the shareable state in a case where the first state indication information of the first connection includes a first remaining quantity of initiating devices capable of sharing the target service carried by the first connection, and the first remaining quantity is not zero.

Alternatively, determining, by the relay device based on the first state indication information of the first connection, whether the first connection is in the shareable state may further include one of following operations: determining that the first connection is in the non-shareable state in a case where the first state indication information of the first connection includes an indication that the target service carried by the first connection does not accept sharing; determining that the first connection is in the non-shareable state in a case where the first state indication information of the first connection includes a maximum quantity of initiating devices capable of sharing the target service carried by the first connection, and a current quantity of initiating devices that have already shared the target service carried by the first connection reaches the maximum quantity; determining that the first connection is in the non-shareable state in a case where the first state indication information of the first connection includes an indication that a quantity of initiating devices that have already shared the target service carried by the first connection reaches a maximum quantity; or determining that the first connection is in the non-shareable state in a case where the first state indication information of the first connection includes a first remaining quantity of initiating devices capable of sharing the target service carried by the first connection, and the first remaining quantity is zero.

Herein, the first state indication information of the first connection may include at least one of: an indication of whether each of at least one service carried by the first connection accepts sharing; a maximum quantity of initiating devices capable of sharing each of the at least one service carried by the first connection; an indication of whether a quantity of initiating devices that have already shared each of the at least one service carried by the first connection reaches a maximum quantity; or a first remaining quantity of initiating devices capable of sharing each of the at least one service carried by the first connection. The at least one service includes the target service.

It should be understood that description of the four types of content included in the first state indication information of the first connection is similar to that in the above embodiments, except that the first state indication information of the first connection includes specific information corresponding to each service carried by the first connection. Therefore, details about the above information content are not repeated herein. Specific description regarding that the relay device determines, based on the first state indication information of the first connection, whether the first connection is in the shareable state is also similar to that in the above embodiments, except that the relay device determines, at the granularity of the target service, whether the target service carried by the first connection allows sharing, and then determines whether the first connection allows sharing which is not elaborated herein for brevity.

In some embodiments, the second message is used to request to share the first connection to transmit the data between the first device and the second device. Subsequent to receiving the second message from the relay device, the method further includes: transmitting, by the second device, a response message of the second message to the relay device, wherein the response message of the second message indicates whether the second device agrees to share the first connection, the response message of the second message carries second state indication information of the first connection, wherein the second state indication information of the first connection is used by the relay device to determine next time whether the first connection is in the shareable state.

Transmitting, by the second device, the response message of the second message to the relay device includes one of following operations: transmitting a response message of the second message to the relay device, the response message of the second message indicating that the second device agrees to share the first connection, in a case where the second device determines to share the first connection; and transmitting a response message of the second message to the relay device, the response message of the second message indicating that the second device rejects to share the first connection, in a case where the second device determines not to share the first connection. That is, regardless of whether the second device determines to share the first connection or rejects to share the first connection, the second state indication information of the first connection is carried in the response message of the second message.

As described in the above embodiments, the second message may be the link modification request message for the first connection. Correspondingly, in a case where the response message of the second message indicates that the second device agrees to share the first connection, the response message of the second message may specifically be a link modification acceptance message for the first connection. In a case where the response message of the second message indicates that the second device rejects to share the first connection, the response message of the second message may specifically be a link modification rejection message for the first connection.

Description is separately provided based on two scenarios: the second message used to request to share the first connection does not carry the information of the target service, and the second message used to request to share the first connection carries the information of the target service.

In one scenario, the second message used to request to share the first connection does not carry the information of the target service.

The second state indication information of the first connection includes at least one of: the indication of whether the first connection accepts sharing; the maximum quantity of initiating devices capable of sharing the first connection; the indication of whether the quantity of initiating devices that have already shared the first connection reaches the maximum quantity; or a third remaining quantity of initiating devices capable of sharing the first connection. Detailed description of the four types of content included in the second state indication information of the first connection is similar to that of the first state indication information of the first connection in the above embodiments, which is not elaborated herein for brevity.

Prior to transmitting the response message of the second message, the second device also determines whether to share the first connection and acquires the second state indication information of the first connection. A processing manner in which the second device determines whether to share the first connection and acquire the second state indication information of the first connection may include: acquiring, by the second device obtains relevant state information of the first connection based on the ID of the first connection in the second message; determining, based on the relevant state information of the first connection, whether the first connection is in the shareable state; and in a case where the first connection is in the non-shareable state, determining not to share the first connection, and generating the second state indication information of the first connection based on the relevant state information of the first connection; or in a case where the first connection is in the shareable state, determining to share the first connection, and generating the second state indication information of the first connection based on the relevant state information of the first connection. It should be understood that a manner in which the second device determines whether to share the first connection is only for illustrative purposes. In actual processing, the second device may also determine whether to share the first connection based on a remaining quantity of processing resources of the second device, a total quantity of connected initiating devices, or other information, which is not elaborated herein for brevity.

The relevant state information of the first connection may be relevant state information that is of the first connection and updated by the second device in real time.

In some embodiments, the relevant state information of the first connection may include whether the first connection keeps the shareable. Determining whether the first connection is in the shareable state based on the relevant state information of the first connection may include: determining that the first connection is in the shareable state in a case where the relevant state information of the first connection is that the first connection keeps the shareable; or determining that the first connection is in the non-shareable state in a case where the relevant state information of the first connection is that the first connection keeps sharing not permitted.

Further, determining not to share the first connection and generating the second state indication information of the first connection based on the relevant state information of the first connection in a case where the first connection is in the non-shareable state may include: in a case where the first connection is in the non-shareable state, determining not to share the first connection, and generating second state indication information that is of the first connection and includes the indication that the first connection does not accept sharing. Determining to share the first connection and generating the second state indication information of the first connection based on the relevant state information of the first connection in a case where the first connection is in the shareable state may include: in a case where the first connection is in the shareable state, determining to share the first connection, and generating second state indication information that is of the first connection and includes the indication that the first connection accepts sharing.

In some embodiments, the relevant state information of the first connection may include the maximum quantity of initiating devices capable of sharing the first connection, and the current quantity of initiating devices that have already shared the first connection. Correspondingly, determining whether the first connection is in the shareable state based on the relevant state information of the first connection may include: acquiring the current quantity of initiating devices that have already shared the first connection from the relevant state information of the first connection in a case where the relevant state information of the first connection includes the maximum quantity of initiating devices capable of sharing the first connection; and in a case where the current quantity of initiating device that have already shared the first connection is less than the maximum quantity, determining that the first connection is in the shareable state; or in a case where the current quantity of initiating devices that have already shared the first connection is not less than the maximum quantity, determining that the first connection is in the non-shareable state.

Further, determining not to share the first connection and generating the second state indication information of the first connection based on the relevant state information of the first connection in a case where the first connection is in the non-shareable state may include: in a case where the first connection is in the non-shareable state, determining not to share the first connection, and generating second state indication information that is of the first connection and includes at least one of: the indication that the first connection does not accept sharing, the maximum quantity of initiating devices capable of sharing the first connection, the indication that the quantity of initiating devices that have already shared the first connection reaches the maximum quantity, or the third remaining quantity of initiating devices capable of sharing the first connection, wherein the third remaining quantity is zero. Determining to share the first connection and generating the second state indication information of the first connection based on the relevant state information of the first connection in a case where the first connection is in the shareable state may include: in a case where the first connection is in the shareable state, determining to share the first connection, and generating second state indication information that is of the first connection and includes at least one of: the indication that the first connection accepts sharing, the maximum quantity of initiating devices capable of sharing the first connection, the indication that the quantity of initiating devices that have already shared the first connection does not reach the maximum quantity, or the third remaining quantity of initiating devices capable of sharing the first connection, wherein the third remaining quantity is not zero.

In another scenario, the second message used to request to share the first connection carries the information of the target service.

In a possible example, the first connection carries the target service.

The second state indication information of the first connection includes at least one of: an indication of whether the target service carried by the first connection accepts sharing; a maximum quantity of initiating devices capable of sharing the target service carried by the first connection; an indication of whether a quantity of initiating devices that have already shared the target service carried by the first connection reaches a maximum quantity; or a third remaining quantity of initiating devices capable of sharing the target service carried by the first connection. Detailed description of the four types of content included in the second state indication information of the first connection is similar to that of the first state indication information of the first connection in the above embodiments, which is not elaborated herein for brevity.

It should be understood that the first connection may carry one or more services, and the one or more services may include the target service. Therefore, the second state indication information of the first connection specifically includes at least one of: an indication of whether each service carried by the first connection accepts sharing next time; a maximum quantity of initiating devices capable of sharing each service carried by the first connection; an indication of whether a quantity of initiating devices that have already shared each service carried by the first connection reaches the maximum quantity; or a third remaining quantity of initiating devices capable of sharing each service carried by the first connection.

Prior to transmitting the response message of the second message, the second device also determines whether to share the first connection and acquires the second state indication information of the first connection. Determining, by the second device, whether to share the first connection and acquire the second state indication information of the first connection may include: acquiring, by the second device based on the ID of the first connection and the information of the target service that are carried in the second message, relevant state information of the target service carried by the first connection; determining, based on the relevant state information of the target service carried by the first connection, whether the target service carried by the first connection is in the shareable state; and in a case where the target service carried by the first connection is in the non-shareable state, determining not to share the first connection, and generating the second state indication information of the first connection based on the relevant state information of the target service carried by the first connection; or in a case where the target service carried by the first connection is in the shareable state, determining to share the first connection, and generating the second state indication information of the first connection based on the relevant state information of the first connection.

In some embodiments, the relevant state information of the target service carried by the first connection may include whether the target service carried by the first connection keeps the shareable. Determining whether the target service carried by the first connection is in the shareable state based on the relevant state information of the target service carried by the first connection may include: in a case where the relevant state information of the target service carried by the first connection is that the target service carried by the first connection keeps the shareable, determining that the target service carried by the first connection is in the shareable state; or in a case where the relevant state information of the target service carried by the first connection is that the target service carried by the first connection keeps sharing not permitted, determining that the target service carried by the first connection is in the non-shareable state.

Further, determining not to share the first connection and generating the second state indication information of the first connection based on the relevant state information of the target service carried by the first connection in a case where the target service carried by the first connection is in the non-shareable state may include: in a case where the target service carried by the first connection is in the non-shareable state, determining not to share the first connection, and generating second state indication information that is of the first connection and includes an indication that the target service carried by the first connection does not accept sharing. Determining to share the first connection and generating the second state indication information of the first connection based on the relevant state information of the target service carried by the first connection in a case where the target service carried by the first connection is in the shareable state may include: in a case where the target service carried by the first connection is in the shareable state, determining to share the first connection, and generating second state indication information that is of the first connection and includes an indication that the target service carried by the first connection accepts sharing.

In some embodiments, the relevant state information of the target service carried by the first connection may include a maximum quantity of initiating devices capable of sharing the target service carried by the first connection, and a current quantity of initiating devices that have already shared the target service carried by the first connection. Correspondingly, determining whether the target service carried by the first connection is in the shareable state based on the relevant state information of the target service carried by the first connection may include: acquiring the current quantity of initiating devices that have already shared the target service carried by the first connection from the relevant state information of the target service carried by the first connection in a case where the relevant state information of the target service carried by the first connection includes the maximum quantity of initiating devices capable of sharing the target service carried by the first connection; and in a case whre the current quantity of initiating device that have already shared the target service carried by the first connection is less than the maximum quantity, determining that the target service carried by the first connection is in the shareable state, or in a case where the current quantity of initiating device that have already shared the target service carried by the first connection is not less than the maximum quantity, determining that the target service carried by the first connection is in the non-shareable state.

Further, determining not to share the first connection and generating the second state indication information of the first connection based on the relevant state information of the target service carried by the first connection in a case where the target service carried by the first connection is not in the shareable state may include: in a case where the target service carried by the first connection is not in the shareable state, determining not to share the first connection, and generating second state indication information that is of the first connection and includes at least one of: an indication that the target service carried by the first connection does not accept sharing, a maximum quantity of initiating devices capable of sharing the target service carried by the first connection, an indication that the quantity of initiating devices that have already shared the target service carried by the first connection reaches a maximum quantity, or a third remaining quantity of initiating devices capable of sharing the target service carried by the first connection, wherein the third remaining quantity is zero. Determining to share the first connection and generating the second state indication information of the first connection based on the relevant state information of the target service carried by the first connection in a case where the target service carried by the first connection is in the shareable state may include: in a case where the target service carried by the first connection is in the shareable state, determining to share the first connection, and generating second state indication information that is of the first connection and includes at least one of: an indication that the target service carried by the first connection does not accept sharing, a maximum quantity of initiating devices capable of sharing the target service carried by the first connection, an indication that the quantity of initiating devices that have already shared the target service carried by the first connection reaches a maximum quantity, or the third remaining quantity of initiating devices capable of sharing the first connection, wherein the third remaining quantity is not zero.

In a possible example, the first connection does not carry the target service, and no connection is present between the relay device and the second device to carry the target service.

Transmitting the response message of the second message to the relay device, the response message confirming sharing of the first connection, in a case where the second device determines to share the first connection includes: transmitting the response message of the second message to the relay device, the response message indicating that the second device agrees to share the first connection, in a case where the second device determines to share the first connection and the carrying of the target service is added on the first connection. That is, in this example, a unique first connection in the shareable state is present between the relay device and the second device, but the first connection does not carry the target service. Therefore, the second device is capable of adding configuration information related to the target service on the first connection based on the information of the target service carried by the second message, to add the carrying of the target service. In a case of successfully adding the carrying of the target service, the response message that is of the second message and used to confirm sharing of the first connection is transmitted to the relay device.

In addition, in a case where the second device determines not to share the first connection or the carrying of the target service cannot be added on the first connection, the response message of the second message is transmitted to the relay device, wherein the response message indicates that the second device rejects to share the first connection. In addition, in this case, the one or more services in the second state indication information of the first connection does not include the target service.

A method used by the second device to determine whether to share the first connection may be the same as that used to perform the determining based on the relevant state information of the first connection in the above embodiments, and will not be repeatedly described. A reason why the second device cannot add the carrying of the target service is not limited in the embodiments.

In some embodiments, the second message is used to request to share the first connection to transmit the data between the first device and the second device. Subsequent to transmitting the second message to the second device, the method further includes: receiving, by the relay device the response message of the second message from the second device, wherein the response message of the second message indicates whether the second device agrees to share the first connection, and the response message of the second message carries the second state indication information of the first connection, wherein the second state indication information of the first connection is used by the relay device to determine next time whether the first connection is in the shareable state.

A manner in which the relay device determines next time, based on the second state indication information of the first connection, whether the first connection is in the shareable state is the same as the processing manner in which the relay device determines, based on the first state indication information of the first connection, whether the first connection is in the shareable state in the above embodiments, which is not elaborated herein for brevity.

In a scenario, the second message used to request to share the first connection does not carry the information of the target service.

In some embodiments, the first message is further used to request to establish the fourth connection between the first device and the relay device; and subsequent to receiving the response message of the second message from the second device, the method further includes: transmitting, by the relay device, a connection confirmation response to the first device in a case where the response message of the second message indicates that the second device agrees to share the first connection and the establishment of the fourth connection is completed.

Correspondingly, subsequent to transmitting the first message to the relay device, the method further includes: in response to receiving the connection confirmation response from the relay device, determining, by the first device, to establish the fourth connection, and determining that a connection between the first device and the second device is completed.

Specifically, transmitting, by the relay device, the connection confirmation response to the first device in a case where the response message of the second message indicates that the second device agrees to share the first connection and the establishment of the fourth connection is completed may include: performing, by the relay device, security information exchange with the first device in a case where the response message of the second message indicates that the second device agrees to share the first connection; and transmitting, by the relay device, the connection confirmation response to the first device subsequent to completing the security information exchange with the first device and determining that the establishment of the fourth connection is completed. The connection confirmation response may carry address information of the second device. The address information may be network address information, for example, may be at least one of the IP address, the MAC address, or the like. The address information of the second device may be acquired by the relay device from locally stored context of the first connection. Alternatively, the address information of the second device may be carried in the response message of the second message.

During the security information exchange between the relay device and the first device, in a case where the first message carries the address information of the first device, the relay device performs the security information exchange with the first device based on the address information of the first device; or in a case where the first message does not carry the address information of the first device, the relay device acquires the address information of the first device from the first device, and then performs the security information exchange with the first device based on the address information of the first device. It should be pointed out that before the first device and the relay device complete the establishment of the fourth connection, a direct communication request message transmitted between the first device and the relay device is a signaling message, and only the ID of the first device needs to be used. The establishment of the fourth connection between the first device and the relay device requires further establishment of a security-based connection, and therefore the address information of the first device needs to be used to establish the security-based connection. A specific process of performing the security information exchange between the first device and the relay device until the establishment of the fourth connection is completed is not limited in the embodiments.

In some embodiments, subsequent to receiving the response message of the second message from the second device, the method further includes: retransmitting, by the relay device, the second message used to request to establish the second connection between the relay device and the second device in a case where the response message of the second message indicates that the second device rejects to share the first connection.

Alternatively, subsequent to receiving the response message of the second message from the second device, the method further includes: determining, by the relay device, whether another connection other than the first connection is present between the relay device and the second device in a case where the response message of the second message indicates that the second device rejects to share the first connection; and in a case where the another connection is not present, retransmitting the second message used to request to establish the second connection between the relay device and the second device to the second device; or in a case where at least one other connection is present, selecting one connection from the at least one other connection as a fifth connection, and transmitting a third message to the second device in a case where the fifth connection is in the shareable state. The third message is used to request to share the fifth connection to forward the data between the first device and the second device over the fifth connection. In addition, in a case where the fifth connection is in the non-shareable state, the second message used to request to establish the second connection between the relay device and the second device can be transmitted to the second device. Alternatively, in a case where the fifth connection is in the non-shareable state, if other remaining connections are present, one connection can be selected from the remaining connections as the fifth connection, and the determination is performed again. If no other remaining connection is present, the second message used to request to establish the second connection between the relay device and the second device is transmitted to the second device.

In this case, a generation method of the third message is similar to that of the first message, except that the first connection corresponding to the first message is replaced with the fifth connection. A method for determining whether the fifth connection is in the shareable state is also the same as that for determining whether the first connection is in the shareable state, which is not elaborated herein for brevity. Processing performed by the second device subsequent to receiving the third message from the relay device is similar to the processing performed by the second device subsequent to receiving the second message from the relay device, which is not elaborated herein for brevity. Content that may be included in a response message of the third message from the second device is also similar to content in the response message of the second message, except that the first connection is replaced with the fifth connection, which is not elaborated herein for brevity. Processing performed by the relay device subsequent to receiving the response message of the third message from the second device is similar to the processing performed by the relay device subsequent to receiving the response message of the second message from the second device, which is not elaborated herein for brevity.

In another scenario, the second message used to request to share the first connection carries the information of the target service.

After the relay device receives the response message of the second message from the second device, in a case where the response message of the second message indicates that the second device agrees to share the first connection, both processing performed by the relay device and processing performed by the first device are the same as those in the above embodiments, except that the first connection carries the target service, which are not elaborated herein for brevity.

In a case where the response message of the second message indicates that the second device rejects to share the first connection, the relay device retransmits the second message used to request to establish the second connection between the relay device and the second device to the second device. The second message used to request to establish the second connection between the relay device and the second device carries the information of the target service.

In some embodiments, the second message is used to request to establish the second connection between the relay device and the second device to transmit the data between the first device and the second device. Subsequent to receiving the second message from the relay device, the method further includes: transmitting, by the second device, the response message of the second message to the relay device, wherein the response message of the second message indicates whether the second device and the relay device complete the establishment of the second connection.

In a scenario, the second message used to request to establish the second connection between the relay device and the second device does not carry the information of the target service.

Transmitting, by the second device, the response message of the second message to the relay device may include: performing, by the second device, the security information exchange with the relay device; and subsequent to performing the security information exchange with the relay device and determining that the establishment of the second connection is completed, transmitting, by the second device, a response message of the second message to the relay device, wherein the response message of the second message indicates that the second device and the relay device complete the establishment of the second connection. The response message of the second message may carry the address information of the second device. It should be understood that the second device may transmit a response message of the second message to the relay device, the response message of the second message indicating that the second connection fails to be established, in a case where the second device determines that the second connection cannot be established.

In a case where the response message of the second message indicates that the second device and the relay device complete the establishment of the second connection, the response message of the second message carries state indication information of the second connection, wherein the state indication information of the second connection is used by the relay device to determine next time whether the second connection is in the shareable state. Content and a generation method of the state indication information of the second connection are similar to those of the second state indication information of the first connection, which are not elaborated herein for brevity.

In a case where the relay device transmits the second message to the second device, the method further includes: receiving, by the relay device, the response message of the second message from the second device, wherein the response message of the second message indicates whether the second device and the relay device complete the establishment of the second connection.

The first message is further used to request to establish the fourth connection between the first device and the relay device. Subsequent to receiving the response message of the second message from the second device, the method further includes: transmitting, by the relay device, a connection confirmation response to the first device in a case where the response message of the second message indicates that the second device and the relay device complete the establishment of the second connection and the establishment of the fourth connection is completed.

Herein, transmitting, by the relay device, the connection confirmation response to the first device in the case where the response message of the second message indicates that the second device and the relay device complete the establishment of the second connection and the establishment of the fourth connection is completed may include: performing, by the relay device, the security information exchange with the first device in the case where the response message of the second message indicates that the second device and the relay device complete the establishment of the second connection; and transmitting, by the relay device, the connection confirmation response to the first device subsequent to completing the security information exchange with the first device and determining that the establishment of the fourth connection is completed. Relevant description of the connection confirmation response is the same as that in the above embodiments, which is not elaborated herein for brevity.

In a case where the first device transmits the first message to the relay device, the method further includes: in response to receiving the connection confirmation response from the relay device, determining, by the first device, to establish the fourth connection, and determining that the connection between the first device and the second device is completed.

In a scenario, the second message used to request to establish the second connection between the relay device and the second device carries the information of the target service.

Processes performed by the second device may include: receiving, by the second device, the second message from the relay device, wherein the second message is used to request to establish the second connection between the relay device and the second device, wherein the second connection is configured to transmit the data between the first device and the second device. Specifically, the second message is used to request to establish the second connection between the relay device and the second device to carry the target service. Subsequent to receiving the second message from the relay device, the method further includes: transmitting, by the second device, a response message of the second message to the relay device, wherein the response message of the second message indicates whether the establishment of the second connection between the relay device and the second device to carry the target device is completed.

Establishing, by the second device, the second connection carrying the target service may include: performing, by the second device, the security information exchange with the relay device, and establishing, based on the information of the target service, the second connection carrying the target service subsequent to performing the security information exchange with the relay device. In addition, in a case where the establishment of the second connection is determined as completed, a response message of the second message is transmitted to the relay device, wherein the response message of the second message indicates that the establishment of the second connection carrying the target service is completed. The response message of the second message may carry the address information of the second device. It should be understood that the second device may transmit the response message of the second message to the relay device, the response message of the second message indicating that the second connection fails to be established, in a case where the second device determines that the second connection cannot be established.

In a case where the response message of the second message indicates that the establishment of the second connection carrying the target service is completed, the response message of the second message carries the state indication information of the second connection, wherein the state indication information of the second connection is used by the relay device to determine next time whether the second connection is in the shareable state. The content and the generation method of the state indication information of the second connection are similar to those of the second state indication information of the first connection, which are not elaborated herein for brevity.

Processing after the relay device receives the response message of the second message from the second device is the same as that in the above embodiments, which is not elaborated herein for brevity.

With reference to FIG. 6A, the following exemplarily describes the foregoing communication method by using an example in which the first device is a first initiating UE, the relay device is a relay UE, the second device is a target UE, and the aforementioned connection is specifically a PC5 connection. Specific processes are as follows.

In process 6101, the first initiating UE transmits a first message to the relay UE. The first message carries an ID of the first initiating UE and an ID of the target UE. A type of the first message may be a direct communication request message. In some embodiments, the first message may also carry information of a target service. In some embodiments, the first message may also carry address information of the first initiating UE.

In process 6102, the relay UE determines whether a PC5 connection is present between the relay UE and the target UE. In a case where a first PC5 connection is present between the relay UE and the target UE, process 6103 is performed. In a case where no PC5 connection is present, process 6108 is performed.

In process 6103, based on first connection state information of the first PC5 connection, the relay UE determines whether the first PC5 connection is in a shareable state. In a case where the first PC5 connection is in the shareable state, process 6104 is performed. In a case where the first PC5 connection is in the non-shareable state, process 6108 is performed.

In process 6104, the relay UE transmits a second message to the target UE. The second message is used to request to share the first PC5 connection.

The second message may specifically be a link modification request message for the first PC5 connection.

In process 6105, the target UE determines whether to share the first PC5 connection. In a case where the target UE determines to share the first PC5 connection, process 6106 is performed. In a case where the target UE determines not to share the first PC5 connection, process 6107 is performed.

In process 6106, the target UE transmits a response message of the second message to the relay UE, wherein the response message of the second message is used to confirm sharing of the first PC5 connection, and then process 6110 is performed.

The response message of the second message used to confirm sharing of the first connection may be a link modification acceptance message for the first PC5 connection.

In process 6107, the target UE transmits a response message of the second message to the relay UE, wherein the response message of the second message is used to reject sharing of the first PC5 connection. The response message of the second message used to reject sharing of the first PC5 connection may be a link modification rejection message for the first PC5 connection.

In process 6108, the relay UE transmits a second message used to request to establish a second PC5 connection between the relay device and the second device to the target UE, wherein the second PC5 connection is configured to transmit data between the first device and the second device. A type of the second message may be a direct communication request message.

In process 6109, in a case where the target UE and the relay UE complete the establishment of the second PC5 connection, the target UE transmits a response message of the second message used to confirm completion of the establishment of the second PC5 connection to the relay UE. The response message of the second message used to confirm the completion of the establishment of the second PC5 connection may be a direct communication acceptance message for the second message.

In process 6110, the relay UE performs security information exchange with the first initiating UE.

In process 6111, the relay UE transmits a connection confirmation response to the first initiating UE, and the processing ends. The connection confirmation response may be a direct communication acceptance message for the first message.

The first message may carry the information of the target service, and the second message may carry the information of the target service. In a case where the above messages carry the information of the target service, specific processing in the above processes is the same as that in the above embodiments, which is not elaborated herein for brevity.

Based on the above example, the relay UE can determine, based on whether the first PC5 connection allows sharing, whether to transmit the second message, that is, the link modification request message for the first PC5 connection, to the target UE. Therefore, the first PC5 connection between the relay UE and the target UE can serve a plurality of initiating UEs, and a problem of resource and time waste because the relay UE reestablishes a link with the target UE due to generation of a sharing rejection response message after the relay UE transmits the link modification request message without performing determining is avoided.

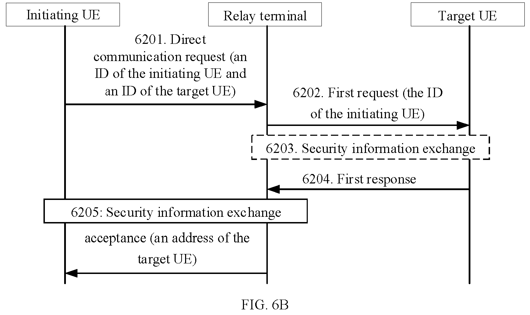

With reference to FIG. 6B, the following exemplarily describes the foregoing communication method by using an example in which the first device is an initiating UE, the relay device is a relay terminal, the second device is a target UE, the first message is a direct communication request, the second message is a first request, the response message of the second message is a first response, the connection confirmation response is a direct communication acceptance, and the aforementioned connection is specifically a PC5 connection. Specific processes are as follows.

In process 6201, the initiating UE transmits a direct communication request message to the relay terminal. The direct communication request message includes an ID of the initiating UE and an ID of the target UE, and optionally includes service information, and optionally includes address information of the initiating UE. In the embodiments, an ID of a UE may be at least one of an application layer ID or an L2 ID of the UE, the service information may be an application ID, a service type, a relay service code, or the like, and the address information may be, for example, an IP address or a MAC address.

In process 6202, in a case where the relay terminal determines that no PC5 connection or no PC5 connection of a corresponding service is present between the relay UE and the target UE, the first request is a direct communication request message that includes the ID of the initiating UE and optionally includes the address information of the initiating UE.

In a case where a PC5 connection or a PC5 connection of the corresponding service is already present, the relay terminal transmits the first request, that is, a link modification request message for the existing PC5 connection, to the target UE to request to use the existing PC5 connection to transmit data between the initiating UE and the target UE. The message includes the ID of the initiating UE, and optionally includes the address information of the initiating UE.

In process 6203, the target UE and the relay terminal perform security information exchange. This process can be performed in a case where the first request is the direct communication request message.

In process 6204, the target UE transmits the first response to the relay terminal.

Specifically, in a case where the first request is the direct communication request message, the target UE replies the relay terminal with the first response. The first response is a direct communication acceptance message that optionally includes address information of the target UE. In this process, a maximum quantity of acceptable initiating UEs for the connection, or whether to accept link sharing is also carried. Based on the maximum quantity of acceptable initiating UEs for the connection, the relay terminal determines whether a first request message to be transmitted to the target UE next time is the link modification request message or the direct communication request message. The first request message transmitted by the relay terminal next time is the link modification request message if a carried indication is that the link sharing is accepted, or the first request message is the direct communication request message if the carried indication is that the link sharing is not accepted. In a case where the carried indication is that acceptable initiating UEs for a current link reach a maximum quantity, the relay terminal can calculate a supported maximum quantity of acceptable initiating UEs for a current link, and then determine, based on the maximum quantity, whether the transmitted first request is the link modification request message or the direct communication request message.

Based on the first response, the target UE determines to reuse the existing PC5 connection. The first response (message) may be, for example, a link modification acceptance message for the existing PC5 connection, and may optionally include the address information of the target UE in this process. In this process, the maximum quantity of acceptable initiating UEs for the connection, or whether to continuously accept the link sharing is also carried. In this process, the maximum quantity of acceptable initiating UEs for the connection, or whether to accept the link sharing, or that the acceptable initiating UEs for the current link reach the maximum quantity is also carried. Based on the maximum quantity of acceptable initiating UEs for the connection, the relay terminal determines whether the first request message to be transmitted to the target UE next time is the link modification request message or the direct communication request message. The first request message transmitted by the relay UE next time is the link modification request message if the carried indication is that the link sharing is continuously accepted, or the first request message transmitted by the relay UE is the direct communication request message if the carried indication is that the link sharing is not continuously accepted. In a case where the carried indication is that the acceptable initiating UEs for the current link reach the maximum quantity, the relay UE can derive that the acceptable initiating UEs for the current link reach the maximum quantity. At this time, if some initiating UEs stop the service and release the link, the relay UE can continue to use the link for other initiating UEs.

In process 6205, the initiating UE and the relay terminal perform the security information exchange. In this process, the relay terminal may optionally acquire the address information of the initiating UE.

In process 6206, the relay terminal replies the initiating UE with the direct communication acceptance (message), and establishment of a PC5 link between the relay UE and the initiating UE is completed. The message carries the address information of the target UE. For example, an address determined by the relay UE for the target UE is acquired from the process 6204 or from locally stored context of the existing PC5 connection between the relay UE and the target UE.

In some embodiments, the first device can determine whether to share a connection between the first device and the relay device.

Transmitting, by the first device, the first message to the relay device includes: transmitting, by the first device, the first message to the relay device in a case where a third connection is present between the first device and the relay device and the third connection is in the shareable state, wherein the first message is further used to request to share the third connection.

Transmitting, by the first device, the first message to the relay device includes: transmitting, by the first device, the first message to the relay device in a case where the third connection is present between the first device and the relay device and the third connection is in the non-shareable state, wherein the first message is further used to request to establish the fourth connection between the first device and the relay device.

Transmitting, by the first device, the first message to the relay device includes: transmitting, by the first device, the first message to the relay device in a case where no connection is present between the first device and the relay device, wherein the first message is further used to request to establish the fourth connection between the first device and the relay device.

The first device determines, based on first state indication information of the third connection, whether the third connection is in the shareable state.

That is, in this implementation, the first message is further used to request to share the third connection between the first device and the relay device, or the first message is further configuration to request to establish the fourth connection between the first device and the relay device.

The first message may carry the ID of the first device and the ID of the second device. Alternatively, in addition to the ID of the first device and the ID of the second device, the first message may also carry the information of the target service.

Description is separately provided based on two scenarios: the first message does not carry the information of the target service, and the first message carries the information of the target service.

In one scenario, the first message does not carry the information of the target service.

Prior to transmitting the first message to the relay device, the first device may first determine whether a connection is present between the first device and the relay device. In a case where no connection is present between the first device and the relay device, the first device transmits the first message used to request to establish the fourth connection between the first device and the relay device to the relay device.

Alternatively, prior to transmitting the first message to the relay device, the first device may first determine whether a connection is present between the first device and the relay device. In a case where one connection is present between the first device and the relay device, the one connection is determined as the third connection between the first device and the relay device. Based on the first state indication information of the third connection, the first device determines whether the third connection is in the shareable state; and transmits the first message used to request to share the third connection to the relay device in a case where the third connection is in the shareable state, or transmits the first message used to request to establish the fourth connection between the first device and the relay device to the relay device in a case where the third connection is in the non-shareable state.

Alternatively, prior to transmitting the first message to the relay device, the first device may first determine whether a connection is present between the first device and the relay device. In a case where a plurality of connections are present between the first device and the relay device, any one of the plurality of connections is determined as the third connection. Based on the first state indication information of the third connection, the first device determines whether the third connection is in the shareable state. In a case where the third connection is in the shareable state, the first message used to request to share the third connection is transmitted to the relay device. In a case where the third connection is in the non-shareable state and it is determined that the determination is completed for all the connections, the first message used to request to establish the fourth connection between the first device and the relay device is transmitted to the relay device. In a case where the third connection is in the non-shareable state and a remaining connection for which the determination is not performed is present, any one remaining connection is selected as a new third connection to continue the determination.

A manner for determining whether the connection is present between the first device and the relay device can be determined by the first device from state information that is between candidate relay devices and saved by the first device itself, which is not limited in the embodiments.

Determining, by the first device based on the first state indication information of the third connection, whether the third connection is in the shareable state includes one of following operations: determining, by the first device, that the third connection is in the shareable state in a case where the first state indication information of the third connection includes an indication that the third connection accepts sharing; determining, by the first device, that the third connection is in the shareable state in a case where the first state indication information of the third connection includes a maximum quantity of target devices capable of sharing the third connection, and a quantity of target devices that have already shared the third connection is less than the maximum quantity; determining, by the first device, that the third connection is in the shareable state in a case where the first state indication information of the third connection includes an indication that a quantity of target devices that have already shared the third connection does not reach the maximum quantity; or determining, by the first device, that the third connection is in the shareable state in a case where the first state indication information of the third connection includes a second remaining quantity of target devices capable of sharing the third connection, and the second remaining quantity is not zero. Alternatively, in an opposite case, it is determined that the third connection is in the non-shareable state, which is not elaborated herein for brevity.

The first state indication information of the third connection may be transmitted by the relay device to the first device when the first device and the relay device established or shared the third connection last time. The first state indication information of the third connection may include at least one of: an indication of whether the third connection accepts sharing; a maximum quantity of target devices capable of sharing the third connection; an indication of whether a quantity of target devices that have already shared the third connection reaches a maximum quantity; or a second remaining quantity of target devices capable of sharing the third connection.

Detailed description of the four types of content included in the first state indication information of the third connection is similar to that of the first state indication information of the first connection in the above embodiments, which is not elaborated herein for brevity. In addition, specific processing performed by the first device to determine, based on each type of content, whether the third connection is in the shareable state is also similar to the processing performed by the relay device to determine, based on each type of content, whether the first connection is in the shareable state, which is not elaborated herein for brevity.

After the first device determines that the third connection is in the shareable state, the first device can transmit the first message to the relay device, wherein the first message is used to request a connection between the first device and the second device, and the first message is used to request to share the third connection. Sharing of the third connection may be that the relay device forwards the data between the first device and the second device by sharing the third connection.

A type of the first message used to request to share the third connection may be the link modification request message. Specifically, the first message is a link modification request message for the third connection. The first message may further carry relevant information of the third connection. For example, the relevant information of the third connection may be at least one of a number of the third connection, an ID of the third connection, or configuration information of the third connection.

In a case where no connection is present between the first device and the relay device, or in a case where the third connection between the first device and the relay device is in the non-shareable state, the first device transmits the first message used to request to establish the fourth connection between the first device and the relay device to the relay device. A type of the first message may be the direct communication request message. The first message may carry the ID of the first device. Further, the first message may also carry the address information of the first device.

In the other scenario, the first message carries the information of the target service.

In some embodiments, processing performed by the first device may be the same as that in the previous embodiments, that is, the first device does not perform the processing at the granularity of the target service. In this manner, the third connection may carry the target service, or the third connection does not carry the target service, and no connection is present between the first device and the relay device to carry the target service.

In some embodiments, in a case where the first message carries the information of the target service, the first device performs the processing at the granularity of the target service. In this manner, the third connection carries the target service.

Transmitting, by the first device, the first message to the relay device in a case where the third connection is present between the first device and the relay device and the third conncetion is in the shareable state may include: in a case where a connection is present between the first device and the relay device to carry the target service, determining, by the first device, the connection as the third connection between the first device and the relay device; determining, based on the first state indication information of the third connection, whether the third connection is in the shareable state, and transmitting the first message to the relay device in a case where the third connection is in the shareable state, wherein the first message is further used to request to share the third connection and carries the information of the target service.

Processing performed by the first device to transmit the first message further used to request to establish the fourth connection between the first device and the relay device to the relay device in a case where the third connection is in the non-shareable state is the same as that in the above embodiments, except that the first message carries the information of the target service.

Transmitting, by the first device, the first message further used to request to establish the fourth connection between the first device and the relay device to the relay device in a case where no connection is present between the first device and the relay device may include: transmitting, by the first device, the first message used to request to establish the fourth connection between the first device and the relay device to the relay device in a case where no connection is present between the first device and the relay device; or transmitting, by the first device, the first message used to request to establish the fourth connection between the first device and the relay device to the relay device in a case where no connection is present between the first device and the relay device to carry the target service. Different from the above embodiments, in a case where at least one connection is present between the first device and the relay device, the first device determines whether the connection carrying the target service is present in the at least one connection.

Determining, by the first device based on the first state indication information of the third connection, whether the third connection is in the shareable state includes one of following operations: determining that the third connection is in the shareable state in a case where the first state indication information of the third connection includes an indication that the target service carried by the third connection accepts sharing; determining that the third connection is in the shareable state in a case where the first state indication information of the third connection includes a maximum quantity of target devices capable of sharing the target service carried by the third connection, and a quantity of target devices that have already shared the target service carried by the third connection is less than the maximum quantity; determining that the third connection is in the shareable state in a case where the first state indication information of the third connection includes an indication that a quantity of target devices that have already shared the target service carried by the first connection does not reach the maximum quantity; or determining that the third connection is in the shareable state in a case where the first state indication information of the third connection includes a second remaining quantity of target devices capable of sharing the target service carried by the third connection, and the second remaining quantity is not zero. Alternatively, in an opposite case, it is determined that the third connection is in the non-shareable state.

Herein, the first state indication information of the third connection may include at least one of: an indication of whether each of at least one service carried by the third connection accepts sharing; a maximum quantity of target devices capable of sharing each of the at least one service carried by the third connection; an indication of whether a quantity of target devices that have already shared each of the at least one service carried by the third connection reaches a maximum quantity; or a second remaining quantity of target devices capable of sharing each of the at least one service carried by the third connection. The at least one service includes the target service. It should be understood that description of the four types of content included in the first state indication information of the third connection is similar to that in the above embodiments. Therefore, the above information content is not repeated herein. Specific description regarding the determination performed by the first device is also similar to that in the above embodiments, except that the first device determines, at the granularity of the target service, whether the target service carried by the third connection allows sharing, and then determines whether the third connection allows sharing, which is not elaborated herein for brevity.

In some embodiments, processing after the relay device receives the first message from the first device may include: transmitting, by the relay device, the second message to the transmit device, wherein the second message is used to request to share the first connection to transmit the data between the first device and the second device, or the second message is used to request to establish the second connection between the relay device and the second device to transmit the data between the first device and the second device.

Specific description regarding the processing performed by the relay device in the two scenarios that the first message does not carry the information of the target service and the first message carries the information of the target service is the same as that in the above embodiments, which is not repeated herein.

In some embodiments, the second message is used to request to share the first connection to transmit the data between the first device and the second device. Subsequent to receiving the second message from the relay device, the method further includes: transmitting, by the second device, the response message of the second message to the relay device, wherein the response message of the second message indicates whether the second device agrees to share the first connection, and the response message of the second message carries the second state indication information of the first connection, wherein the second state indication information of the first connection is used by the relay device to determine next time whether the first connection is in the shareable state.

Specific description regarding the foregoing processing performed by the second device in the two scenarios that the second message carries the information of the target service and the second message does not carry the information of the target service is the same as that in the above embodiments, which is not elaborated herein for brevity.

Subsequent to transmitting the second message to the second device, the method further includes: receiving, by the relay device, the response message of the second message from the second device, wherein the response message of the second message indicates whether the second device agrees to share the first connection, and the response message of the second message carries the second state indication information of the first connection, wherein the second state indication information of the first connection is used by the relay device to determine next time whether the first connection is in the shareable state.

A processing manner used by the relay device to determine next time, based on the second state indication information of the first connection, whether the first connection is in the shareable state is the same as the processing manner used by the relay device to determine, based on the first state indication information of the first connection, whether the first connection is in the shareable state in the above embodiments, which is not elaborated herein for brevity.

In a scenario, the second message used to request to share the first connection does not carry the information of the target service.

In some embodiments, the first message is further used to request to establish the fourth connection between the first device and the relay device; and subsequent to receiving the response message of the second message from the second device, the method further includes: transmitting, by the relay device, the connection confirmation response to the first device in a case where the response message of the second message indicates that the second device agrees to share the first connection and the establishment of the fourth connection is completed.

Correspondingly, subsequent to transmitting the first message to the relay device, the method further includes: in response to receiving the connection confirmation response from the relay device, determining, by the first device, to establish the fourth connection, and determining that the connection between the first device and the second device is completed.

Processing performed by the relay device to transmit the connection confirmation response to the first device in a case where the response message of the second message indicates that the second device agrees to share the first connection and the establishment of the fourth connection is completed is the same as that in the above embodiments, which is not elaborated herein for brevity.

Different from the above embodiments, in this case, the connection confirmation response carries state indication information of the fourth connection, wherein the state indication information of the fourth connection is used by the first device to determine next time whether the fourth connection is in the shareable state. The state indication information of the fourth connection may include at least one of: an indication of whether the fourth connection accepts sharing; a maximum quantity of target devices capable of sharing the fourth connection; an indication of whether a quantity of target devices that have already shared the fourth connection reaches a maximum quantity; or a remaining quantity of target devices capable of sharing the fourth connection. Meanings of the specific content in the state indication information of the fourth connection are similar to those of the specific content in the second (or first) state indication information of the first connection in the above embodiments, which are not elaborated herein.

In some embodiments, the first message is further used to request to share the third connection between the first device and the relay device; and subsequent to receiving the response message of the second message from the second device, the method further includes: transmitting, by the relay device, a sharing confirmation response to the first device in a case where the response message of the second message indicates that the second device agrees to share the first connection and the relay device determines to share the third connection. Sharing confirmation response carries second state indication information of the third connection, wherein the second state indication information of the third connection is used by the first device to determine next time whether the third connection is in the shareable state.

Correspondingly, subsequent to transmitting the first message to the relay device, the method further includes: in response to receiving sharing confirmation response from the relay device, determining, by the first device, to share the third connection, and determining that the connection between the first device and the second device is completed.

In this case, sharing confirmation response carries the second state indication information of the third connection, wherein the second state indication information of the third connection is used by the first device to determine next time whether the third connection is in the shareable state. The second state indication information of the third connection may include at least one of: an indication of whether the third connection accepts sharing; a maximum quantity of target devices capable of sharing the third connection; an indication of whether a quantity of target devices that have already shared the third connection reaches a maximum quantity; or a remaining quantity of target devices capable of sharing the third connection. Meanings of the specific content in the second state indication information of the third connection are similar to those of the specific content in the second (or first) state indication information of the first connection in the above embodiments, which are not elaborated herein for brevity.

In some embodiments, the response message of the second message indicates that the second device rejects to share the first connection, and processing after the relay device receives the response message of the second message from the second device is the same as that in the above embodiments, which is not elaborated herein for brevity.

In another scenario, the second message carries the information of the target service.

After the relay device receives the response message of the second message from the second device, in a case where the response message of the second message indicates that the second device agrees to share the first connection, both processing performed by the relay device and processing performed by the first device are the same as those in the above embodiments, except that the first connection carries the target service, which are not elaborated herein for brevity.

The relay device transmits the second message to the second device in a case where the response message of the second message indicates that the second device rejects to share the first connection. The second message is used to request to establish the second connection between the relay device and the second device, wherein the second connection is configured to transmit the data between the first device and the second device. Different from the second message in the above embodiments, the second message carries the information of the target service.

In some embodiments, the second message is used to request to establish the second connection between the relay device and the second device, wherein the second connection is configured to transmit the data between the first device and the second device.

In a scenario, the second message used to request to establish the second connection between the relay device and the second device does not carry the information of the target service.

Subsequent to receiving the second message from the relay device, the method further includes: transmitting, by the second device, the response message of the second message to the relay device, wherein the response message of the second message indicates whether the second device and the relay device complete the establishment of the second connection. Processing performed by the second device is the same as that in the above embodiments, which is not elaborated herein for brevity.

Subsequent to transmitting the second message to the second device, the method further includes: receiving, by the relay device, the response message of the second message from the second device, wherein the response message of the second message indicates whether the second device and the relay device complete the establishment of the second connection.

In some embodiments, the first message is further used to request to establish the fourth connection between the first device and the relay device. Subsequent to receiving the response message of the second message from the second device, the method further includes: transmitting, by the relay device, the connection confirmation response to the first device in a case where the response message of the second message indicates that the second device and the relay device complete the establishment of the second connection and the establishment of the fourth connection is completed.

Herein, processing performed by the relay device and processing performed by the first device are the same as those in the above embodiments, which is not elaborated herein for brevity. Different from the connection confirmation response in the above embodiments, the connection confirmation response carries second state indication information of the fourth connection, wherein the second state indication information of the fourth connection is used by the first device to determine next time whether the fourth connection is in the shareable state. The second state indication information of the fourth connection is also the same as that in the above embodiments, which is not elaborated herein for brevity.

In some embodiments, the first message is further used to request to share the third connection between the first device and the relay device. Subsequent to receiving the response message of the second message from the second device, the method further includes: transmitting, by the relay device, sharing confirmation response to the first device in a case where the response message of the second message indicates that the second device and the relay device complete the establishment of the second connection and the relay device determines to share the third connection.

Herein, processing performed by the relay device and processing performed by the first device are the same as those in the above embodiments, which are not elaborated herein for brevity. Different from sharing confirmation response in the above embodiments, sharing confirmation response in this case carries the second state indication information of the third connection, wherein the second state indication information of the third connection is used by the first device to determine next time whether the third connection is in the shareable state. The second state indication information of the third connection is also the same as that in the above embodiments, which is not elaborated herein for brevity.

In a scenario, the second message used to request to establish the second connection between the relay device and the second device carries the information of the target service.

Processing performed by the second device may include: receiving, by the second device, the second message from the relay device, wherein the second message is used to request to establish the second connection between the relay device and the second device, wherein the second connection is configured to transmit the data between the first device and the second device. Specifically, the second message is used to request to establish the second connection between the relay device and the second device to carry the target service. Subsequent to receiving the second message from the relay device, the method further includes: transmitting, by the second device, the response message of the second message to the relay device, wherein the response message of the second message indicates whether the establishment of the second connection carrying the target device is completed.

A manner used by the second device to establish the second connection carrying the target service and processing performed in a case where the response message of the second message indicates that the establishment of the second connection carrying the target service is completed are the same as those in the above embodiments, which are not elaborated herein for brevity.

Subsequent to transmitting the second message to the second device, the method further includes: receiving, by the relay device, the response message of the second message from the second device, wherein the response message of the second message indicates whether the establishment of the second connection carrying the target device is completed.

In a case where the first message is further used to request to establish the fourth connection between the first device and the relay device, or the first message is further configuration to request to share the third connection between the first device and the relay device, processing performed by the relay device and processing performed by the first device are the same as those in the above embodiments, which are not elaborated herein for brevity.

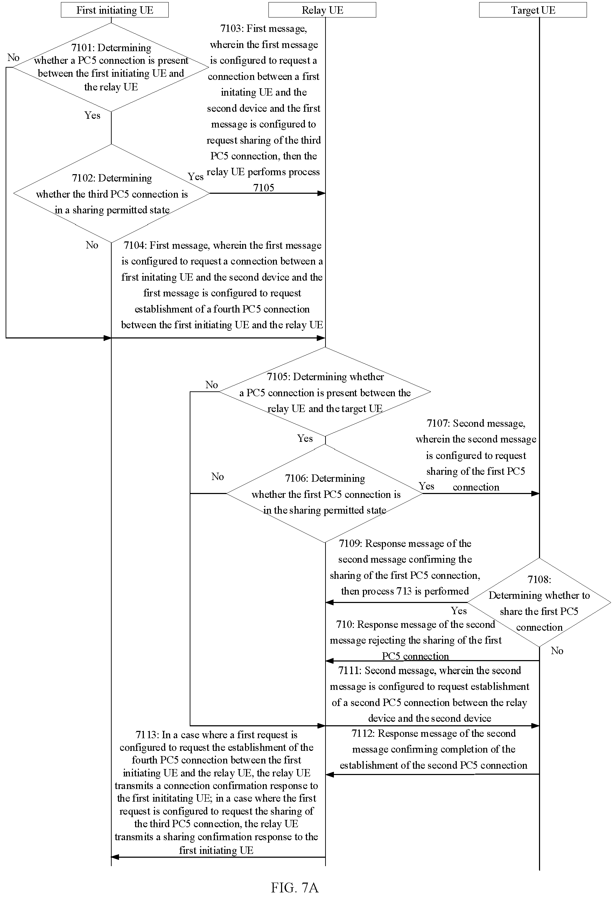

With reference to FIG. 7A, the following exemplarily describes the foregoing communication method by using an example in which the first device is a first initiating UE, the relay device is a relay UE, the second device is a target UE, and the aforementioned connection is specifically a PC5 connection. Specific processes are as follows.

In process 7101, the first initiating UE determines whether a PC5 connection is present between the first initiating UE and the relay UE. In a case where a third PC5 connection is present between the first initiating UE and the relay UE, process 7102 is performed. In a case where no PC5 connection is present, process 7104 is performed.

In process 7102, based on first connection state information of the third PC5 connection, the first initiating UE determines whether the third PC5 connection is in a shareable state. In a case where the third PC5 connection is in the shareable state, process 7103 is performed. In a case where the third PC5 connection is in the non-shareable state, process 7104 is performed.

In process 7103, the first initiating UE transmits a first message to the relay UE. The first message is used to request a connection between the first initating UE and the second device and the first message is used to request to share the third PC5 connection. Then, the relay UE performs process 7105. The first message carries an ID of the first initiating UE and an ID of the target UE. The first message may be a link modification request message for the third PC5 connection. In some embodiments, the first message may also carry information of a target service. In some embodiments, the first message may also carry address information of the first initiating UE.

In process 7104, the first initiating UE transmits a first message to the relay UE. The first message is used to request a connection between the first initating UE and the second device and the first message is used to request to share a fourth PC5 connection between the first initiating UE and the relay UE. The first message carries the ID of the first initiating UE and the ID of the target UE. The first message may be a direct communication request message. In some embodiments, the first message may also carry the information of the target service. In some embodiments, the first message may also carry the address information of the first initiating UE.

In process 7105, the relay UE determines whether a PC5 connection is present between the relay UE and the target UE. In a case where a first PC5 connection is present between the relay UE and the target UE, process 7106 is performed. In a case where no PC5 connection is present, process 7111 is performed.

In process 7106, based on first connection state information of the first PC5 connection, the relay UE determines whether the first PC5 connection is in the shareable state. In a case where the first PC5 connection is in the shareable state, process 7107 is performed. In a case where the first PC5 connection is in the non-shareable state, process 7111 is performed.

In process 7107, the relay UE transmits a second message to the target UE. The second message is used to request to share the first PC5 connection. The second message may specifically be a link modification request message for the first PC5 connection.

In process 7108, the target UE determines whether to share the first PC5 connection. In a case where the target UE determines to share the first PC5 connection, process 7109 is performed. In a case where the target UE determines not to share the first PC5 connection, process 7110 is performed.

In process 7109, the target UE transmits a response message of the second message used to confirm sharing of the first PC5 connection to the relay UE, and then the relay UE performs process 7113. The response message of the second message used to confirm sharing of the first connection may be a link modification acceptance message for the first PC5 connection.

In process 7110, the target UE transmits a response message of the second message used to reject sharing of the first PC5 connection to the relay UE. The response message of the second message used to reject sharing of the first PC5 connection may be a link modification rejection message for the first PC5 connection.

In process 7111, the relay UE transmits a second message to the target UE. The second message is used to request to establish a second PC5 connection between the relay device and the second device, wherein the second PC5 connection is configured to transmit data between the first device and the second device. A type of the second message may be a direct communication request message.

In process 7112, in a case where the target UE and the relay UE complete the establishment of the second PC5 connection, the target UE transmits a response message of the second message used to confirm completion of the establishment of the second PC5 connection to the relay UE. The response message of the second message used to confirm the completion of the establishment of the second PC5 connection may be a direct communication acceptance message for the second message.

In process 7113, in a case where a first request is configured to request to establish the fourth PC5 connection between the first initiating UE and the relay UE, the relay UE transmits a connection confirmation response to the first initiating UE. In a case where the first request is configured to request to share the third PC5 connection, the relay UE transmits a sharing confirmation response to the first initiating UE. The connection confirmation response may be a direct communication acceptance message corresponding to the first message or a link modification acceptance message corresponding to the first message.

The first message may carry the information of the target service, and the second message may carry the information of the target service. In a case where the above messages carry the information of the target service, specific processing in the above processes is the same as that in the above embodiments, which is not elaborated herein for brevity.

Based on the above example, the relay UE can determine, based on whether the first PC5 connection allows sharing, whether to transmit the second message, that is, the link modification request message for the first PC5 connection, to the target UE. In addition, the above example can enable the first initiating UE to determine, based on a quantity of target UEs, whether to initiate a direct communication request or a link modification request to the relay UE.

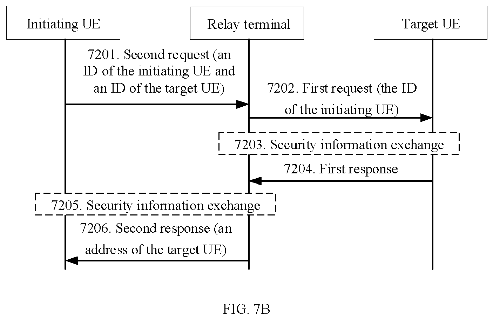

With reference to FIG. 7B, the following exemplarily describes the foregoing communication method by using an example in which the first device is an initiating UE, the relay device is a relay terminal, the second device is a target UE, the first message is a second request, the second message is a first request, the response message of the second message is a first response, and the aforementioned connection is specifically a PC5 connection. Specific processes are as follows.

In process 7201, the initiating UE transmits the second request to the relay terminal. The second request (message) includes an ID of the initiating UE and an ID of the target UE, and optionally includes service information, and optionally includes address information of the initiating UE. In the embodiments, an ID of a UE may be at least one of an application layer ID or an L2 ID of the UE, the service information may be an application ID, a service type, a relay service code, or the like, and the address information may be, for example, an IP address or a MAC address.

In a case where the initiating UE determines that no PC5 connection or no PC5 connection of a corresponding service is present between the relay UE and the initiating UE, the second request is a direct communication request message.

In a case where a PC5 connection or a PC5 connection of the corresponding service is already present, the relay UE transmits the second request, that is, a link modification request message for the existing PC5 connection, to the target UE to request to use the existing PC5 connection to transmit data between the initiating UE and the target UE.

In process 7202, in a case where the relay terminal determines that no PC5 connection or no PC5 connection of the corresponding service is present between the relay UE and the target UE, the first request is a direct communication request message that includes the ID of the initiating UE and optionally includes the address information of the initiating UE.

In a case where the PC5 connection or the PC5 connection of the corresponding service is already present, the first request, that is, the link modification request message for the existing PC5 connection, is transmitted to the target UE to request to use the existing PC5 connection to transmit the data between the initiating UE and the target UE. The message includes the ID of the initiating UE, and optionally includes the address information of the initiating UE.

In process 7203, the target UE and the relay terminal perform security information exchange.

In process 7204, the target UE transmits the first response to the relay terminal.

In a case where the first request is the direct communication request message, the target UE replies the relay UE with the first response, wherein the first response is a direct communication acceptance message. In this process, address information of the target UE is optionally included. In this process, a maximum quantity of acceptable initiating UEs for the connection, or whether to accept link sharing is also carried.

Based on the maximum quantity of acceptable initiating UEs for the connection, the relay UE determines whether the first request to be transmitted to the target UE next time is the link modification request message or the direct communication request message.

The first request message transmitted by the relay UE next time is the link modification request message in a case where a carried indication is that the link sharing is accepted, or the first request message is the direct communication request message in a case where the carried indication is that the link sharing is not accepted. In a case where the carried indication is that acceptable initiating UEs for a current link reach a maximum quantity, the relay UE can calculate a supported maximum quantity of acceptable initiating UEs for a current link, and then determine, based on the maximum quantity, whether the transmitted first request is the link modification request message or the direct communication request message.

In a case where the first request is the link modification request message for the existing PC5 connection, the target UE determines, based on the first response (message), to reuse the existing PC5 connection. The first response (message) may be, for example, a link modification acceptance message for the existing PC5 connection, and may optionally include the address information of the target UE in this process. In this process, the maximum quantity of acceptable initiating UEs for the connection, or whether to continuously accept the link sharing is also carried. In this process, the maximum quantity of acceptable initiating UEs for the connection, or whether to accept the link sharing, or that the acceptable initiating UEs for the current link reach the maximum quantity is also carried. Based on the maximum quantity of acceptable initiating UEs for the connection, the relay UE determines whether the first request message to be transmitted to the target UE next time is the link modification request message or the direct communication request message. The first request message transmitted by the relay UE next time is the link modification request message in a case where the carried indication is that the link sharing is continuously accepted, or the first request message is the direct communication request message in a case where the carried indication is that the link sharing is not continuously accepted. In a case where the carried indication is that the acceptable initiating UEs for the current link reach the maximum quantity, the relay UE can derive that the acceptable initiating UEs for the current link reach the maximum quantity. At this time, if some initiating UEs stop the service and release the link, the relay UE can continue to use the link for other initiating UEs.

In process 7205, in a case where the second message is the direct communication request message, the initiating UE and the relay terminal perform the security information exchange. In this process, the relay terminal may also acquire the address information of the initiating UE.

In process 7206, the relay terminal replies the initiating UE with a second response (message) to establish or modify the PC5 connection between the relay UE and the initiating UE. The message carries the address information of the target UE. For example, an address determined by the relay UE for the target UE is acquired from the process 7204 or from locally stored context of the existing PC5 connection between the relay UE and the target UE.

In this process, a maximum quantity of acceptable target UEs for the connection, or whether to accept the link sharing is also carried.

Based on the maximum quantity of acceptable target UEs for the connection, the initiating UE determines whether the second request message to be transmitted to the relay terminal next time is the link modification request message or the direct communication request message.

The second request message transmitted by the initiating UE next time is the link modification request message if the carried indication is that the link sharing is accepted, or the second request message is the direct communication request message if the carried indication is that the link sharing is not accepted.

In a case where the carried indication is that acceptable target UEs for the current link reach a maximum quantity, the initiating UE can calculate the supported maximum quantity of acceptable target UEs for the current link, and then determine, based on the maximum quantity, whether the transmitted second request is the link modification request message or the direct communication request message. In this case, if some target UEs stop the service and release the link, the initiating UE can continue to use the link for other target UEs. The indication that the acceptable target UEs for the current link reach the maximum quantity can also be carried in a second rejection message.

It can be seen that according to the above solutions, in a case where the first device needs to connect to the second device over the relay device, the relay device can determine whether to request to share an existing connection between the relay device and the second device. In this way, the existing connection between the relay device and the second device can be shared by the relay device to serve a plurality of initiating devices, such that link utilization efficiency between the relay device and the second device is improved.

Moreover, according to the above solutions, in a case where the first device needs to connect to the second device over the relay device, if an existing connection is present between the relay device and the second device, the relay device initiates a message used to request to share the existing connection to the second device only when the relay deivce determines that the existing connection allows sharing. In this way, a same connection can be shared to serve a plurality of initiating devices, and a possibility that the second device rejects the message used to request to share the existing connection can be reduced because the relay device determines in advance whether the existing connection can be shared, such that a problem of affecting processing efficiency caused by retransmitting a request is avoided and processing efficiency of the relay device in sharing the existing connection is improved.

The following further describes beneficial effects of the solutions according to the embodiments with reference to related technologies.

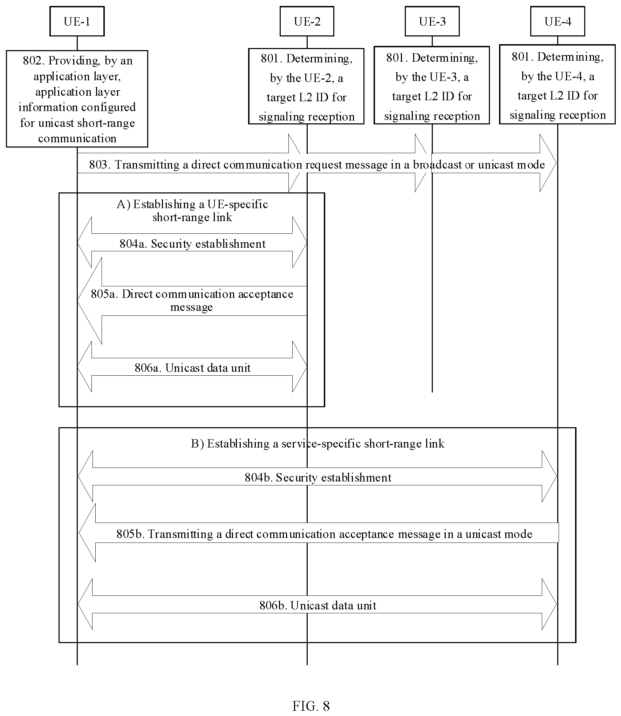

A UE with a ProSe capability is capable of communicating directly with another UE with the ProSe capability over a PC5 interface, and this direct communication between the two UEs can be referred to as unicast short-range communication. As illustrated in FIG. 8, UE-1, UE-2, UE-3, and UE-4 are all UEs with the ProSe capability. During the direct communication (or the unicast short-range communication), in process 801, the UE-2 to the UE-4 can separately determine a target L2 ID used for signaling reception. In process 802, an application of the UE-1 can provide application layer information for the unicast short-range communication, and then process 803 is performed. In the process 803, the UE-1 can transmit a direct communication request message in a broadcast or unicast mode. The direct communication request message can be separately transmitted to the UE-2 to the UE-4. Description is separately provided based on two possible scenarios. In a scenario A), a UE-specific short-range link is to be established. In this scenario, taking establishment of a short-range link between the UE-2 and the UE-1 as an example, in process 804a, the UE-2 and the UE-1 perform security establishment, that is, the UE-2 and the UE-1 may perform security information exchange. In process 805a, after the security establishment is completed, the UE-2 transmits a direct communication acceptance message to the UE-1, wherein the direct communication acceptance message may be transmitted in the unicast mode. In process 806a, the UE-2 and the UE-1 complete the establishment of the link through which a unicast data unit can be transmitted. In a scenario B), a service-specific short-range link is to be established, that is, an established connection is configured to carry a specified service. Taking establishment of a short-range link between the UE-4 and the UE-1 as an example, in process 804b, the UE-4 and the UE-1 perform security establishment, that is, the UE-4 and the UE-1 may perform security information exchange. In process 805b, after the security establishment is completed, the UE-4 transmits a direct communication acceptance message to the UE-1, wherein the direct communication acceptance message may be transmitted in the unicast mode. In process 806b, the UE-4 and the UE-1 complete the establishment of the link through which the unicast data unit can be transmitted. In addition, the link carries a service specified by the UE-1.

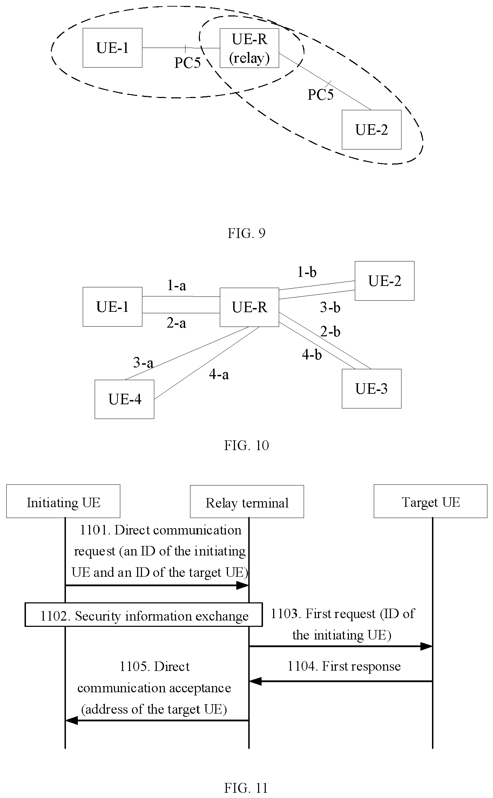

In a case where two UEs with the ProSe capability are far apart and cannot establish communication directly over the PC5 interface, the communication can still be relayed over a relay UE with the ProSe capability. For example, as illustrated in FIG. 9, the relay UE (that is, UE-R in FIG. 9) can communicate directly with the UE-1 over the PC5 interface, and can also communicate directly with the UE-2 over the PC5 interface. Therefore, the UE-1 and the UE-2 can perform service interaction over the relay UE.

In related technologies, a method is provided for UEs to communicate with each other over the UE-R. As illustrated in FIG. 10, the UE-1 acts as an initiating UE and can establish a separate link between the UE-1 and the UE-R (that is, the relay UE) for each target UE (such as the UE-2 and the UE-3). For example, in FIG. 10, link 1-a is used for communication with the UE-2, and link 2-a is used for communication with the UE-3. Similarly, the UE-4 acts as another initiating UE and can establish a separate link between the UE-4 and the UE-R for each target UE. For example, in FIG. 10, link 3-a is used for communication with the UE-2, and link 4-a is used for communication with the UE-3. Correspondingly, for each initiating UE (such as the UE-1 and the UE-4), a separate link is also established between the UE-R and the target UE. As illustrated in FIG. 10, link 1-b is used for communication between the UE-1 and the UE-2, link 3-b is used for communication between the UE-4 and the UE- 2, link 2-b is used for communication between the UE-1 and the UE-3, and link 4-b is used for communication between the UE-4 and the UE-3. In this way, the UE-R only needs to associate the link 1-a with the link 1-b to forward data between the UE-1 and the UE-2. Correspondingly, the link 2-a is associated with the link 2-b, the link 3-a is associated with the link 3-b, and the link 4-a is associated with the link 4-b.

In the related technologies, in a case where a quantity of UEs that perform communication over the UE-R increases, a quantity of links will also increase, which increases processing complexity of the relay UE. Moreover, due to a limited quantity of links that the relay UE can process, a quantity of UEs that can perform the communication over the relay UE is also limited.

In order to control a quantity of links between a UE and the relay UE, link sharing is further proposed in the related technologies. In the link sharing, in a case where the UE-1 serves as the initiating UE and communicates with the UE-2 and the UE-3 (the UE-2 and the UE-3 are two target UEs), a link between the UE-1 and the relay UE can be shared. Alternatively, in a case where the UE-1 (an initiating UE) communicates with the UE-2 (a target UE) and the UE-4 (another initiating UE) communicates with the UE-2, a link between the UE-2 and the relay UE can be shared. As illustrated in FIG. 11, in process 1101, an initiating UE transmits a direct communication request to a relay terminal, wherein the direct communication request may carry an ID of the initiating UE and an ID of a target UE. In process 1102, the initiating UE needs to perform security information exchange with the relay terminal. In process 1103, in a case where the relay UE determines that a link between the relay UE and the target UE can be shared, a first request is a link modification request message, wherein the link modification request message carries the ID of the initiating UE. In process 1104, the target UE determines whether to accept sharing, and transmits a first response to confirm sharing of the link in a case where the target UE determines to accept sharing. In process 1105, the relay UE transmits a direct communication acceptance message to the initiating UE, wherein the direct communication acceptance message may carry an address of the target UE. However, in the process 1104, if the target UE determines that this link cannot be shared by more initiating UEs, the target UE rejects the link modification request message. In this case, the relay UE needs to re-initiate a link establishment process (that is, the first request becomes a direct communication request message). On the contrary, if the relay UE initiates the link establishment process directly, but the target UE believes that there are still more initiating UEs performing communication on the original link, the target UE rejects the link establishment process, and the relay UE needs to re-initiate a link modification process (that is, the first request becomes a link modification request message).

It can be seen that in the related technologies, when sharing an existing connection or establishing a new connection, the relay UE and the target UE do not determine whether an existing connection can be shared. Therefore, the relay UE needs to re-initiate a request to establish a new link or to re-initiate a request to share an existing link. In this way, a process of first performing rejection and then re-initiating a message increases time for service establishment, thereby affecting user experience. However, in the solutions according to the embodiments, in the case where the first device needs to connect to the second device over the relay device, if an existing connection is present between the relay device and the second device, the relay device initiates a message used to request to share the existing connection to the second device only when the relay device determines that the existing connection allows sharing. In this way, a same connection can be shared to serve a plurality of initiating devices, and a possibility that the second device rejects the message used to request to share the existing connection can be reduced because the relay device determines in advance whether the existing connection can be shared. A problem of affecting processing efficiency caused by retransmitting a request is avoided and processing efficiency of the relay device in sharing the existing connection is improved. Similarly, the relay device can initiate a connection establishment request only when the relay device determines that the existing connection does not allow sharing or not present, such that a problem that the second device rejects to establish a new connection and re-initiates a request to share the existing connection is also avoided, thereby ensuring processing efficiency of the relay device in establishing the new connection.

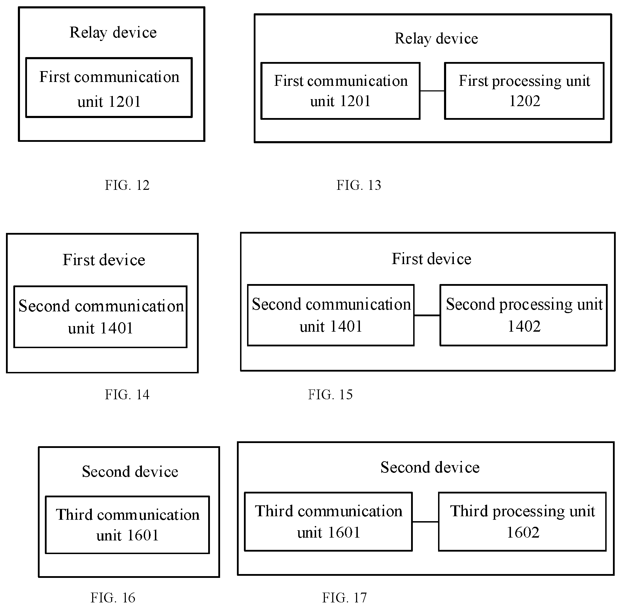

FIG. 12 is a schematic diagram of a composition structure of a relay device according to some embodiments of the present disclosure. The relay device includes a first communication unit 1201.

The first communication unit 1201 is configured to: receive a first message from a first device, wherein the first message is used to request a connection between a first device and a second device, and transmit a second message to the second device, wherein the second message is used to request to share a first connection to transmit data between the first device and the second device, or the second message is used to request to establish a second connection between the relay device and the second device to transmit data between the first device and the second device.

The first communication unit is configured to transmit the second message to the second device in a case where the first connection is present between the relay device and the second device and the first connection is in a shareable state, wherein the second message is used to request to share the first connection to transmit the data between the first device and the second device.

The first communication unit is configured to transmit the second message to the second device in a case where the first connection is present between the relay device and the second device ann the first connection is in a non-shareable state, wherein the second message is used to request to establish the second connection between the relay device and the second device to transmit the data between the first device and the second device.

The first communication unit is configured to transmit the second message to the second device in a case where no connection is present between the relay device and the second device, wherein the second message is used to request to establish the second connection between the relay device and the second device to transmit the data between the first device and the second device.

The first message carries information of a target service.

The first connection carries the target service.

The first connection does not carry the target service, and no connection is present between the relay device and the second device to carry the target service.

The second message carries the information of the target service.

Based on FIG. 12, as illustrated in FIG. 13, the relay device further includes a first processing unit 1202.

The first processing unit 1202 is configured to determine, based on first state indication information of the first connection, whether the first connection is in the shareable state.

The first processing unit is configured to perform one of following operations: determining that the first connection is in the shareable state in a case where the first state indication information of the first connection includes an indication that the first connection accepts sharing; determining that the first connection is in the shareable state in a case where the first state indication information of the first connection includes a maximum quantity of initiating devices capable of sharing the first connection, and a current quantity of initiating devices that have already shared the first connection is less than the maximum quantity; determining that the first connection is in the shareable state in a case where the first state indication information of the first connection includes an indication that a quantity of initiating devices that have already shared the first connection does not reach the maximum quantity; or determining that the first connection is in the shareable state in a case where the first state indication information of the first connection includes a first remaining quantity of initiating devices capable of sharing the first connection, and the first remaining quantity is not zero.

The first processing unit is configured to perform one of following operations: determining that the first connection is in the shareable state in a case where the first state indication information of the first connection includes an indication that the target service carried by the first connection accepts sharing; determining that the first connection is in the shareable state in a case where the first state indication information of the first connection includes a maximum quantity of initiating devices capable of sharing the target service carried by the first connection, and a current quantity of initiating devices that have already shared the target service carried by the first connection is less than the maximum quantity; determining that the first connection is in the shareable state in a case where the first state indication information of the first connection includes an indication that a quantity of initiating devices that have already shared the target service carried by the first connection does not reach the maximum quantity; or determining that the first connection is in the shareable state in a case where the first state indication information of the first connection includes a first remaining quantity of initiating devices capable of sharing the target service carried by the first connection, and the first remaining quantity is not zero.

The first communication unit is configured to: subsequent to transmitting the second message to the second device, receive a response message of the second message from the second device, wherein the response message of the second message indicates whether the second device agrees to share the first connection, and the response message of the second message carries second state indication information of the first connection, wherein the second state indication information of the first connection is used by the relay device to determine next time whether the first connection is in the shareable state.

The first message is further used to request to share a third connection between the first device and the relay device; and the first communication unit is configured to: subsequent to receiving the response message of the second message from the second device, transmit a sharing confirmation response to the first device in a case where the response message of the second message indicates that the second device agrees to share the first connection and the relay device determines to share the third connection.

The first message is further used to request to establish a fourth connection between the first device and the relay device; and the first communication unit is configured to: subsequent to receiving the response message of the second message from the second device, transmit a connection confirmation response to the first device in a case where the response message of the second message indicates that the second device agrees to share the first connection and the establishment of the fourth connection is completed.

The first communication unit is configured to: subsequent to transmitting the second message to the second device, receive the response message of the second message from the second device, wherein the response message of the second message indicates whether the second device and the relay device complete the establishment of the second connection.

The first message is further used to request to share the third connection between the first device and the relay device; and the first communication unit is configured to: subsequent to receiving the response message of the second message from the second device, transmit a sharing confirmation response to the first device in a case where the second device and the relay device complete the establishment of the second connection and the relay device determines to share the third connection.

Sharing confirmation response carries second state indication information of the third connection, wherein the second state indication information of the third connection is used by the first device to determine next time whether the third connection is in the shareable state.

The first message is further used to request to establish the fourth connection between the first device and the relay device; and the first communication unit is configured to: subsequent to receiving the response message of the second message from the second device, transmit the connection confirmation response to the first device in a case where the response message of the second message indicates that the second device and the relay device complete the establishment of the second connection and the establishment of the fourth connection is completed.

The connection confirmation response carries state indication information of the fourth connection, wherein the state indication information of the fourth connection is used by the first device to determine next time whether the fourth connection is in the shareable state.

In a case where the response message of the second message indicates that the second device and the relay device complete the establishment of the second connection, the response message of the second message carries state indication information of the second connection, wherein the state indication information of the second connection is used by the relay device to determine whether the second connection is in the shareable state.

The relay device in the embodiments of the present disclosure can implement a corresponding function of a relay device in the embodiments of the foregoing communication method. For procedures, functions, implementations, and beneficial effects corresponding to the modules (submodules, units, or components) in the relay device, reference may be made to corresponding descriptions in the foregoing method embodiments, which are not elaborated herein. It should be noted that functions described by the modules (submodules, units, or components) in the relay device in the embodiments of the present disclosure may be implemented by different modules (submodules, units, or components), or may be implemented by a same module (submodule, unit, or component).

FIG. 14 is a schematic diagram of a composition structure of a first device according to some embodiments of the present disclosure. The first device includes a second communication unit 1401.

The second communication unit 1401 is configured to transmit a first message to a relay device, wherein the first message is used to request a connection between the first device and a second device, the first message is used to trigger the relay device to transmit a second message to the second device, wherein the second message is used to request to share a first connection to transmit data between the first device and the second device, or the second message is used to request to establish a second connection between the relay device and the second device to transmit data between the first device and the second device.

The second communication unit is configured to transmit the first message to the relay device in a case where a third connection is present between the first device and the relay device and the third connection is in a shareable state, wherein the first message is further used to request to share the third connection.

The second communication unit is configured to transmit the first message to the relay device in a case where a third connection is present between the first device and the relay device and the third connection is in a non-shareable state, wherein the first message is further used to request to establish a fourth connection between the first device and the relay device.

The second communication unit is configured to transmit the first message to the relay device in a case where no connection is present between the first device and the relay device, wherein the first message is further used to request to establish the fourth connection between the first device and the relay device.

The first message carries information of a target service.

The third connection carries the target service.

The third connection does not carry the target service, and no connection is present between the first device and the relay device to carry the target service.

Based on FIG. 14, as illustrated in FIG. 15, the first device further includes a second processing unit 1402.

The second processing unit 1402 is configured to determine, based on first state indication information of the third connection, whether the third connection is in the shareable state.

The second processing unit is configured to perform one of following operations: determining that the third connection is in the shareable state in a case where the first state indication information of the third connection includes an indication that the third connection accepts sharing; determining that the third connection is in the shareable state in a case where the first state indication information of the third connection includes a maximum quantity of target devices capable of sharing the third connection, and a quantity of target devices that have already shared the third connection is less than the maximum quantity; determining that the third connection is in the shareable state in a case where the first state indication information of the third connection includes an indication that a quantity of target devices that have already shared the third connection does not reach the maximum quantity; or determining that the third connection is in the shareable state in a case where the first state indication information of the third connection includes a second remaining quantity of target devices capable of sharing the third connection, and the second remaining quantity is not zero.

The second processing unit is configured to perform one of following operations: determining that the third connection is in the shareable state in a case where the first state indication information of the third connection includes an indication that the target service carried by the third connection accepts sharing; determining that the third connection is in the shareable state in a case where the first state indication information of the third connection includes a maximum quantity of target devices capable of sharing the target service carried by the third connection, and a quantity of target devices that have already shared the target service carried by the third connection is less than the maximum quantity; determining that the third connection is in the shareable state in a case where the first state indication information of the third connection includes an indication that a quantity of target devices that have already shared the target service carried by the third connection does not reach the maximum quantity; or determining that the third connection is in the shareable state in a case where the first state indication information of the third connection includes a second remaining quantity of target devices capable of sharing the target service carried by the third connection, and the second remaining quantity is not zero.

In a case where the second communication unit is configured to receive, subsequent to transmitting the first message to the relay device, a sharing confirmation response from the relay device, the second processing unit is configured to determine to share the third connection, and determine that the connection between the first device and the second device is completed.

Sharing confirmation response carries second state indication information of the third connection, wherein the second state indication information of the third connection is used by the first device to determine next time whether the third connection is in the shareable state.

In a case where the second communication unit is configured to receive, subsequent to transmitting the first message to the relay device, a connection confirmation response from the relay device, the second processing unit is configured to determine to establish the fourth connection, and determine that the connection between the first device and the second device is completed.

The connection confirmation response carries state indication information of the fourth connection, wherein the state indication information of the fourth connection is used by the first device to determine next time whether the fourth connection is in the shareable state.

The first device in the embodiments of the present disclosure can implement a corresponding function of a first device in the embodiments of the foregoing communication method. For procedures, functions, implementations, and beneficial effects corresponding to the modules (submodules, units, or components) in the first device, reference may be made to corresponding descriptions in the foregoing method embodiments, which are not elaborated herein. It should be noted that functions described by the modules (submodules, units, or components) in the first device in the embodiments of the present disclosure may be implemented by different modules (submodules, units, or components), or may be implemented by a same module (submodule, unit, or component).

FIG. 16 is a schematic diagram of a composition structure of a second device according to some embodiments of the present disclosure. The second device includes: a third communication unit 1601.

The third communication unit 1601 is configured to receive a second message from a relay device, wherein the second message is used to request to share a first connection to transmit data between a first device and the second device, or the second message is used to request to establish a second connection between the relay device and the second device to transmit data between a first device and the second device.

The second message carries information of a target service.

The first connection carries the target service.

The first connection does not carry the target service, and no connection is present between the relay device and the second device to carry the target service.

The second message is used to request to share the first connection to transmit the data between the first device and the second device; and the third communication unit is configured to: subsequent to receiving the second message from the relay device, transmit a response message of the second message to the relay device, wherein the response message of the second message indicates whether the second device agrees to share the first connection, and the response message of the second message carries second state indication information of the first connection, wherein the second state indication information of the first connection is used by the relay device to determine next time whether the first connection is in a shareable state.

The third communication unit is configured to perform one of following operations: transmitting a response message of the second message to the relay device, the response message of the second message indicating that the second device agrees to share the first connection, in a case where the second device determines to share the first connection; and transmitting a response message of the second message to the relay device, the response message of the second message indicating that the second device rejects to share the first connection, in a case where the second device determines not to share the first connection.

The second state indication information of the first connection includes at least one of: an indication of whether the first connection accepts sharing; a maximum quantity of initiating devices capable of sharing the first connection; an indication of whether a quantity of initiating devices that have already shared the first connection reaches a maximum quantity; or a third remaining quantity of initiating devices capable of sharing the first connection.

Based on FIG. 16, as illustrated in FIG. 17, the first device further includes a third processing unit 1602.

The third processing unit 1602 is configured to transmit, over the third communication unit, the response message of the second message indicating that the second device agrees to share the first connection to the relay device in a case where the first connection is determined to be shared and carrying of the target service is added on the first connection.

The second state indication information of the first connection includes at least one of: an indication of whether the target service carried by the first connection accepts sharing; a maximum quantity of initiating devices capable of sharing the target service carried by the first connection; an indication of whether a quantity of initiating devices that have already shared the target service carried by the first connection reaches a maximum quantity; or a third remaining quantity of initiating devices capable of sharing the target service carried by the first connection.

The second message is used to request to establish the second connection between the relay device and the second device to transmit the data between the first device and the second device; and the third communication unit is configured to: subsequent to receiving the second message from the relay device, transmit a response message of the second message to the relay device, wherein the response message of the second message indicates whether the second device and the relay device complete the establishment of the second connection.

In a case where the response message of the second message indicates that the second device and the relay device complete the establishment of the second connection, the response message of the second message carries state indication information of the second connection, wherein the state indication information of the second connection is used by the relay device to determine next time whether the second connection is in the shareable state.

The second device in the embodiments of the present disclosure can implement a corresponding function of the second device in the embodiments of the foregoing communication method. For procedures, functions, implementations, and beneficial effects corresponding to the modules (submodules, units, or components) in the second device, reference may be made to corresponding descriptions in the foregoing method embodiments, which are not elaborated herein. It should be noted that functions described by the modules (submodules, units, or components) in the second device in the embodiments of the present application may be implemented by different modules (submodules, units, or components), or may be implemented by a same module (submodule, unit, or component).

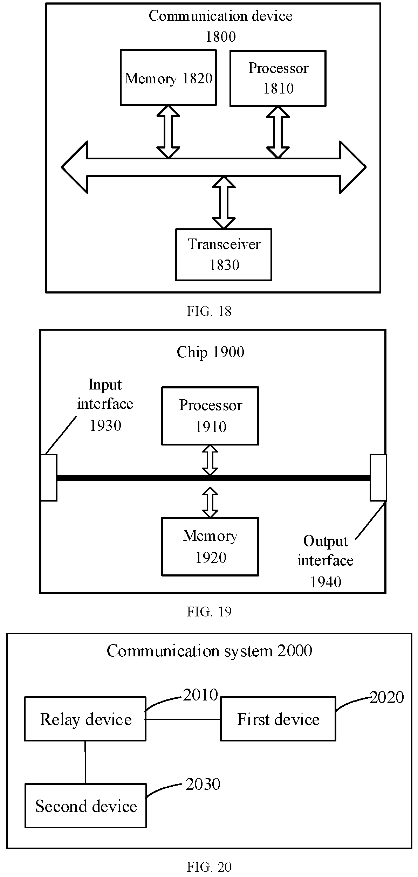

FIG. 18 is a schematic structural diagram of a communication device 1800 according to some embodiments of the present disclosure. The communication device 1800 includes a processor 1810. The processor 1810 may invoke and run a computer program in a memory to cause the communication device 1800 to perform the communication method in the embodiments of the present disclosure.

In some embodiments, the communication device 1800 may further include a memory 1820. The processor 1810 may invoke and run a computer program in the memory 1820 to cause the communication device 1800 to perform the communication method in the embodiments of the present disclosure.

The memory 1820 may be a component independent from the processor 1810 or the memory 1820 is integrated in the processor 1810.

In some embodiments, the communication device 1800 may further include a transceiver 1830. The processor 1810 can control the transceiver 1830 to communicate with another device, specifically, the processor 1810 can control the transceiver 1830 to transmit information or data to the another device or receive information or data from the another device.

The transceiver 1830 may include a transmitter and a receiver. The transceiver 1830 may further include at least one antenna.

In some embodiments, the communication device 1800 may be a relay device in the embodiments of the present disclosure. The communication device 1800 may perform a corresponding process performed by the relay device in the communication method in the embodiments of the present disclosure, which is not elaborated herein for brevity. In some embodiments, the communication device 1800 may be a first device in the embodiments of the present disclosure. The communication device 1800 may perform a corresponding process performed by the first device in the communication method in the embodiments of the present disclosure. For brevity, which is not elaborated herein for brevity. In some embodiments, the communication device 1800 may be a second device in the embodiments of the present disclosure. The communication device 1800 may perform a corresponding process performed by the second device in the communication method in the embodiments of the present disclosure, which is not elaborated herein for brevity.

FIG. 19 is a schematic structural diagram of a chip 1900 according to some embodiments of the present disclosure. The chip 1900 includes a processor 1910. The processor 1910 may invoke and run a computer program in a memory to perform the communication method in the embodiments of the present disclosure.

In some embodiments, the chip 1900 may further include a memory 1920. The processor 1910 may invoke and run a computer program in the memory 1920 to perform the communication method performed by a relay device, a first device, or a second device in the embodiments of the present disclosure. The memory 1920 may be a component independent from the processor 1910 or the memory 1920 is may be integrated in the processor 1910.

In some embodiments, the chip 1900 may further include an input interface 1930. The processor 1910 can control the input interface 1930 to communicate with another device or chip, specifically, the processor 1910 can control the input interface 1930 to acquire information or data from the another device or chip. In some embodiments, the chip 1900 may further include an output interface 1940. The processor 1910 can control the output interface 1940 to communicate with another device or chip, specifically, the processor 1910 can control the output interface 1940 to output information or data to the another device or chip.

In some embodiments, the chip may be equipped in the relay device in the embodiments of the present disclosure. The chip may perform a corresponding process performed by the relay device in the communication method in the embodiments of the present disclosure, which is not elaborated herein for brevity. In some embodiments, the chip may be equipped in the first device in the embodiments of the present disclosure. The chip may perform a corresponding process performed by the first device in the communication method in the embodiments of the present disclosure, which is not elaborated herein for brevity. In some embodiments, the chip may be equipped in the second device in the embodiments of the present disclosure. The chip may perform a corresponding process performed by the second device in the communication method in the embodiments of the present disclosure, which is not elaborated herein for brevity.

It is understandable that the chip in the embodiments of the present disclosure is also referred to as a system-level chip, a system chip, a chip system, a system-on-chip, or the like.

The processor mentioned above is a general-purpose processor, a digital signal processor (DSP), a field-programmable gate array (FPGA), an application-specific integrated circuit (ASIC), or other programmable logic device, a transistor logic device, or a discrete hardware component. The general-purpose processor is a microprocessor, or any conventional processor, or the like.

The memory mentioned above is a transitory memory or a non-transitory memory, or the memory includes both the transitory memory and the non-transitory memory. The non-transitory memory is a read-only memory (ROM), a programmable ROM (PROM), an erasable PROM (EPROM), an electrically EPROM (EEPROM), or a flash memory. The transitory memory is a random access memory (RAM).

It is understandable that the memory described above is exemplary but not limited. For example, the memory according to the embodiments of the present disclosure is a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memory in the embodiments of the present disclosure is intended to include, but is not limited to, these and any other suitable types of memories.

FIG. 20 is a schematic block diagram of a communication system 2000 according to some embodiments of the present disclosure. The communication system 2000 includes a relay device 2010, a first device 2020, and a second device 2030. The relay device 2010 may be configured to perform a corresponding function performed by a relay device in the foregoing communication method. The first device 2020 may be configured to perform a corresponding function performed by a first device in the foregoing communication method. The second device 2030 may be configured to perform a corresponding function performed by a second device in the foregoing communication method.

The embodiments described above are implemented in whole or in part by software, hardware, firm ware or any combination thereof. In a case where the embodiments are implemented by software, the embodiments are implemented in the form of a computer program product in whole or in part. The computer program product includes one or more computer instructions. The one or more computer program instructions, when loaded and executed by a computer, wholly or partially generate the flows or functions according to the embodiments of the disclosure. The computer is a general-purpose computer, a dedicated computer, a computer network, or other programmable device. The one or more computer instructions are stored in a computer-readable storage medium, or transmitted from one computer-readable storage medium to another computer-readable storage medium. For example, the one or more computer instructions are transmitted from a website site, a computer, a server or a data center in a wired (such as a coaxial cable, an optical fiber, a digital subscriber line (DSL)) or wireless (such as infrared, radio, or microwave) fashion to another website site, computer, server or data center. The computer-readable storage medium is any available medium that is accessible by a computer or a data storage device integrated with one or more available mediums, such as a server or a data center. The available medium is a magnetic medium (for example, a floppy disk, a hard disk, and a magnetic tape), an optical medium (for example, a DVD), or a semiconductor medium (for example, a solid state disk (SSD)).

It is understandable that, in various embodiments of the present disclosure, the serial number of each of the above processes does not imply the order of execution, and the order of execution of each of the processes should be determined by its function and inherent logic, without constituting any limitation of the implementation process of the embodiments of the present disclosure.

Those skilled in the art may clearly understand that for the convenience and brevity of description, for the specific operating processes of the systems, apparatuses, and units described above, reference may be made to the corresponding processes in the method embodiments, which are not described any further.

Described above are exemplary embodiments of the present disclosure, but the protection scope of the present disclosure is not limited to these exemplary embodiments. Various variations or substitutions readily conceivable by those skilled in the art within the technical scope disclosed in the present disclosure shall fall within the protection scope of the present disclosure. Therefore, the protection scope of the present disclosure shall be subject to the appended claims.

## Claims

1. A communication method, performed by a relay device, the method comprising:
receiving a first message from a first device, wherein the first message is used to request a connection between the first device and a second device; and
transmitting a second message to the second device, wherein the second message is used to request to share a first connection to transmit data between the first device and the second device, or the second message is used to request to establish a second connection between the relay device and the second device to transmit data between the first device and the second device.

2. The method according to claim 1, wherein transmitting the second message to the second device comprises:
transmitting the second message to the second device in a case where the first connection is present between the relay device and the second device and the first connection is in a shareable state, wherein the second message is used to request to share the first connection to transmit the data between the first device and the second device.

3. The method according to claim 1, wherein transmitting the second message to the second device comprises:
transmitting the second message to the second device in a case where the first connection is present between the relay device and the second device but the first connection is in a non-shareable state, wherein the second message is used to request to establish the second connection between the relay device and the second device to transmit the data between the first device and the second device.

4. The method according to claim 1, wherein transmitting the second message to the second device comprises:
transmitting the second message to the second device in a case where no connection is present between the relay device and the second device, wherein the second message is used to request to establish the second connection between the relay device and the second device to transmit the data between the first device and the second device.

5. The method according to any one of claims 1 to 4, wherein the first message carries information of a target service.

6. The method according to any one of claims 1 to 5, wherein the first connection carries a target service.

7. The method according to any one of claims 1 to 5, wherein the first connection does not carry a target service, and no connection is present between the relay device and the second device to carry the target service.

8. The method according to any one of claims 1 to 7, wherein the second message carries information of a target service.

9. The method according to any one of claims 1 to 8, further comprising:
determining, based on first state indication information of the first connection, whether the first connection is in a shareable state.

10. The method according to claim 9, wherein determining, based on the first state indication information of the first connection, whether the first connection is in the shareable state comprises one of:
determining that the first connection is in the shareable state in a case where the first state indication information of the first connection comprises an indication that the first connection accepts sharing;
determining that the first connection is in the shareable state in a case where the first state indication information of the first connection comprises a maximum quantity of initiating devices capable of sharing the first connection, and a current quantity of initiating devices that have already shared the first connection is less than the maximum quantity;
determining that the first connection is in the shareable state in a case where the first state indication information of the first connection comprises an indication that a quantity of initiating devices that have already shared the first connection does not reach the maximum quantity; or
determining that the first connection is in the shareable state in a case where the first state indication information of the first connection comprises a first remaining quantity of initiating devices capable of sharing the first connection, and the first remaining quantity is not zero.

11. The method according to claim 9, wherein determining, based on the first state indication information of the first connection, whether the first connection is in the shareable state comprises one of following operations:
determining that the first connection is in the shareable state in a case where the first state indication information of the first connection comprises an indication that a target service carried by the first connection accepts sharing;
determining that the first connection is in the shareable state in a case where the first state indication information of the first connection comprises a maximum quantity of initiating devices capable of sharing the target service carried by the first connection, and a current quantity of initiating devices that have already shared the target service carried by the first connection is less than the maximum quantity;
determining that the first connection is in the shareable state in a case where the first state indication information of the first connection comprises an indication that a quantity of initiating devices that have already shared the target service carried by the first connection does not reach the maximum quantity; or
determining that the first connection is in the shareable state in a case where the first state indication information of the first connection comprises a first remaining quantity of initiating devices capable of sharing the target service carried by the first connection, and the first remaining quantity is not zero.

12. The method according to claim 2, wherein subsequent to transmitting the second message to the second device, the method further comprises:
receiving a response message of the second message from the second device, wherein the response message of the second message indicates whether the second device agrees to share the first connection, and the response message of the second message carries second state indication information of the first connection, the second state indication information of the first connection being used by the relay device to determine next time whether the first connection is in the shareable state.

13. The method according to claim 12, wherein the first message is further used to request to share a third connection between the first device and the relay device; and subsequent to receiving the response message of the second message from the second device, the method further comprises:
transmitting a sharing confirmation response to the first device in a case where the response message of the second message indicates that the second device agrees to share the first connection and the relay device determines to share the third connection.

14. The method according to claim 12, wherein the first message is further used to request to establish a fourth connection between the first device and the relay device; and subsequent to receiving the response message of the second message from the second device, the method further comprises:
transmitting a connection confirmation response to the first device in a case where the response message of the second message indicates that the second device agrees to share the first connection and the fourth connection has been established.

15. The method according to claim 3 or 4, wherein subsequent to transmitting the second message to the second device, the method further comprises:
receiving a response message of the second message from the second device, wherein the response message of the second message indicates whether the second connection has been established between the second device and the relay device.

16. The method according to claim 15, wherein the first message is further used to request to share a third connection between the first device and the relay device; and subsequent to receiving the response message of the second message from the second device, the method further comprises:
transmitting a sharing confirmation response to the first device in a case where the response message of the second message indicates that the second connection has been established between the second device and the relay device and the relay device determines to share the third connection.

17. The method according to claim 13 or 16, wherein sharing confirmation response carries second state indication information of the third connection, wherein the second state indication information of the third connection is used by the first device to determine next time whether the third connection is in the shareable state.

18. The method according to claim 15, wherein the first message is further used to request to establish a fourth connection between the first device and the relay device; and subsequent to eceiving the response message of the second message from the second device, the method further comprises:
transmitting a connection confirmation response to the first device in a case where the response message of the second message indicates that the second connection has been established between the second device and the relay device and the fourth connection has been established between the first device and the delay device.

19. The method according to claim 14 or 18, wherein the connection confirmation response carries state indication information of the fourth connection, wherein the state indication information of the fourth connection is used by the first device to determine next time whether the fourth connection is in the shareable state.

20. The communication method according to any one of claims 15 to 18, wherein in a case where the response message of the second message indicates that the second connection has been established between the second device and the relay device, the response message of the second message carries state indication information of the second connection, wherein the state indication information of the second connection is used by the relay device to determine whether the second connection is in a shareable state.

21. A communication method, performed by a first device, the method comprising:
transmitting a first message to a relay device, wherein the first message is used to request a connection between the first device and a second device, the first message is used to trigger the relay device to transmit a second message to the second device, wherein the second message is used to request to share a first connection to transmit data between the first device and the second device, or the second message is used to request to establish a second connection between the relay device and the second device to transmit data between the first device and the second device.

22. The method according to claim 21, wherein transmitting the first message to the relay device comprises:
transmitting the first message to the relay device in a case where a third connection is present between the first device and the relay device and the third connection is in a shareable state, wherein the first message is further used to request to share the third connection.

23. The method according to claim 21, wherein transmitting the first message to the relay device comprises:
transmitting the first message to the relay device in a case where a third connection is present between the first device and the relay device and the third connection is in a non-shareable state, wherein the first message is further used to request to establish a fourth connection between the first device and the relay device.

24. The method according to claim 21, wherein transmitting the first message to the relay device comprises:
transmitting the first message to the relay device in a case where no connection is present between the first device and the relay device, wherein the first message is further used to request to establish a fourth connection between the first device and the relay device.

25. The method according to any one of claims 21 to 24, wherein the first message carries information of a target service.

26. The method according to any one of claims 21 to 25, wherein a third connection carries a target service.

27. The method according to any one of claims 21 to 25, wherein a third connection does not carry a target service, and no connection is present between the first device and the relay device to carry the target service.

28. The method according to any one of claims 22 to 27, further comprising:
determining, based on first state indication information of the third connection, whether the third connection is in the shareable state.

29. The method according to claim 28, wherein determining, based on the first state indication information of the third connection, whether the third connection is in the shareable state comprises one of following operations:
determining that the third connection is in the shareable state in a case where the first state indication information of the third connection comprises an indication that the third connection accepts sharing;
determining that the third connection is in the shareable state in a case where the first state indication information of the third connection comprises a maximum quantity of target devices capable of sharing the third connection, and a quantity of target devices that have already shared the third connection is less than the maximum quantity;
determining that the third connection is in the shareable state in a case where the first state indication information of the third connection comprises an indication that a quantity of target devices that have already shared the third connection does not reach the maximum quantity; or
determining that the third connection is in the shareable state in a case where the first state indication information of the third connection comprises a second remaining quantity of target devices capable of sharing the third connection, and the second remaining quantity is not zero.

30. The method according to claim 28, wherein determining, based on the first state indication information of the third connection, whether the third connection is in the shareable state comprises one of following operations:
determining that the third connection is in the shareable state in a case where the first state indication information of the third connection comprises an indication that a target service carried by the third connection accepts sharing;
determining that the third connection is in the shareable state in a case where the first state indication information of the third connection comprises a maximum quantity of target devices capable of sharing the target service carried by the third connection, and a quantity of target devices that have already shared the target service carried by the third connection is less than the maximum quantity;
determining that the third connection is in the shareable state in a case where the first state indication information of the third connection comprises an indication that the quantity of target devices that have already shared the target service carried by the third connection does not reach the maximum quantity; or
determining that the third connection is in the shareable state in a case where the first state indication information of the third connection comprises a second remaining quantity of target devices capable of sharing the target service carried by the third connection, and the second remaining quantity is not zero.

31. The method according to claim 22, wherein subsequent to transmitting the first message to the relay device, the method further comprises:
in response to receiving a sharing confirmation response from the relay device, determining to share the third connection, and determining that a connection has been established between the first device and the second device.

32. The method according to claim 31, wherein sharing confirmation response carries second state indication information of the third connection, wherein the second state indication information of the third connection is used by the first device to determine next time whether the third connection is in the shareable state.

33. The method according to claim 23 or 24, wherein subsequent to transmitting the first message to the relay device, the method further comprises:
in response to receiving a connection confirmation response from the relay device, determining to establish the fourth connection, and determining that a connection has been established between the first device and the second device.

34. The method according to claim 33, wherein the connection confirmation response carries state indication information of the fourth connection, wherein the state indication information of the fourth connection is used by the first device to determine next time whether the fourth connection is in the shareable state.

35. A communication method, performed by a second device, the method comprising:
receiving a second message from a relay device, wherein the second message is used to request to share a first connection to transmit data between a first device and the second device, or the second message is used to request to establish a second connection between the relay device and the second device to transmit data between a first device and the second device.

36. The method according to claim 35, wherein the second message carries information of a target service.

37. The method according to claim 35 or 36, wherein the first connection carries a target service.

38. The method according to claim 35 or 36, wherein the first connection does not carry a target service, and no connection is present between the relay device and the second device to carry the target service.

39. The method according to any one of claims 35 to 38, wherein the second message is used to request to share the first connection to transmit the data between the first device and the second device; and subsequent to receiving the second message from the relay device, the method further comprises:
transmitting a response message of the second message to the relay device, wherein the response message of the second message indicates whether the second device agrees to share the first connection, the response message of the second message carries second state indication information of the first connection, wherein the second state indication information of the first connection is used by the relay device to determine next time whether the first connection is in a shareable state.

40. The method according to claim 39, wherein transmitting the response message of the second message to the relay device comprises one of following operations:
transmitting a response message of the second message to the relay device, the response message of the second message indicating that the second device agrees to share the first connection, in a case where the second device determines to share the first connection; or
transmitting a response message of the second message to the relay device, the response message of the second message indicating that the second device rejects to share the first connection, in a case where the second device determines not to share the first connection.

41. The method according to claim 39 or 40, wherein the second state indication information of the first connection comprises at least one of:
an indication of whether the first connection accepts sharing;
a maximum quantity of initiating devices capable of sharing the first connection;
an indication of whether a quantity of initiating devices that have already shared the first connection reaches the maximum quantity; or
a third remaining quantity of initiating devices capable of sharing the first connection.

42. The method according to claim 40, wherein transmitting the response message of the second message to the relay device, the response message of the second message indicating that the second device agrees to share the first connection, in a case where the second device determines to share the first connection comprises:
transmitting the response message of the second message to the relay device, the response message of the second message indicating that the second device agrees to share the first connection, in a case where the second device determines to share the first connection and carrying of a target service is added on the first connection.

43. The method according to claim 39 or 42, wherein the second state indication information of the first connection comprises at least one of:
an indication of whether a target service carried by the first connection accepts sharing;
a maximum quantity of initiating devices capable of sharing a target service carried by the first connection;
an indication of whether a quantity of initiating devices that have already shared a target service carried by the first connection reaches a maximum quantity; or
a third remaining quantity of initiating devices capable of sharing a target service carried by the first connection.

44. The method according to any one of claims 35 to 38, wherein the second message is used to request to establish the second connection between the relay device and the second device to transmit the data between the first device and the second device; and subsequent to receiving the second message from the relay device, the method further comprises:
transmitting a response message of the second message to the relay device, wherein the response message of the second message indicates whether the second connection has been established between the second device and the relay device.

45. The method according to claim 44, wherein in a case where the response message of the second message indicates that the second connection has been established between the second device and the relay device, the response message of the second message carries state indication information of the second connection, wherein the state indication information of the second connection is used by the relay device to determine next time whether the second connection is in a shareable state.

46. A relay device, comprising:
a first communication unit configured to: receive a first message from a first device, wherein the first message is used to request a connection between the first device and a second device; and transmit a second message to the second device, wherein the second message is used to request to share a first connection to transmit data between the first device and the second device, or the second message is used to request to establish a second connection between the relay device and the second device to transmit data between the first device and the second device.

47. The relay device according to claim 46, wherein the first communication unit is configured to transmit the second message to the second device in a case where the first connection is present between the relay device and the second device and the first connection is in a shareable state, wherein the second message is used to request to share the first connection to transmit the data between the first device and the second device.

48. The relay device according to claim 46, wherein the first communication unit is configured to transmit the second message to the second device in a case where the first connection is present between the relay device and the second device but the first connection is in a non-shareable state, wherein the second message is used to request to establish the second connection between the relay device and the second device to transmit the data between the first device and the second device.

49. The relay device according to claim 46, wherein the first communication unit is configured to transmit the second message to the second device in a case where no connection is present between the relay device and the second device, wherein the second message is used to request to establish the second connection between the relay device and the second device to transmit the data between the first device and the second device.

50. The relay device according to any one of claims 46 to 49, wherein the first message carries information of a target service.

51. The relay device according to any one of claims 46 to 50, wherein the first connection carries a target service.

52. The relay device according to any one of claims 46 to 50, wherein the first connection does not carry a target service, and no connection is present between the relay device and the second device to carry the target service.

53. The relay device according to any one of claims 46 to 52, wherein the second message carries information of a target service.

54. The relay device according to any one of claims 46 to 53, further comprising:
a first processing unit configured to determine, based on first state indication information of the first connection, whether the first connection is in a shareable state.

55. The relay device according to claim 54, wherein the first processing unit is configured to perform one of following operations: determining that the first connection is in the shareable state in a case where the first state indication information of the first connection comprises an indication that the first connection accepts sharing; determining that the first connection is in the shareable state in a case where the first state indication information of the first connection comprises a maximum quantity of initiating devices capable of sharing the first connection, and a current quantity of initiating devices that have already shared the first connection is less than the maximum quantity; determining that the first connection is in the shareable state in a case where the first state indication information of the first connection comprises an indication that a quantity of initiating devices that have already shared the first connection does not reach the maximum quantity; or determining that the first connection is in the shareable state in a case where the first state indication information of the first connection comprises a first remaining quantity of initiating devices capable of sharing the first connection, and the first remaining quantity is not zero.

56. The relay device according to claim 54, wherein the first processing unit is configured to perform one of following operations: determining that the first connection is in the shareable state in a case where the first state indication information of the first connection comprises an indication that a target service carried by the first connection accepts sharing; determining that the first connection is in the shareable state in a case where the first state indication information of the first connection comprises a maximum quantity of initiating devices capable of sharing a target service carried by the first connection, and a current quantity of initiating devices that have already shared the target service carried by the first connection is less than the maximum quantity; determining that the first connection is in the shareable state in a case where the first state indication information of the first connection comprises an indication that a quantity of initiating devices that have already shared a target service carried by the first connection does not reach the maximum quantity; or determining that the first connection is in the shareable state in a case where the first state indication information of the first connection comprises a first remaining quantity of initiating devices capable of sharing a target service carried by the first connection, and the first remaining quantity is not zero.

57. The relay device according to claim 47, wherein the first communication unit is configured to: subsequent to transmitting the second message to the second device, receive a response message of the second message from the second device, wherein the response message of the second message indicates whether the second device agrees to share the first connection, and the response message of the second message carries second state indication information of the first connection, the second state indication information of the first connection being used by the relay device to determine next time whether the first connection is in the shareable state.

58. The relay device according to claim 57, wherein the first message is further used to request to share a third connection between the first device and the relay device; and
the first communication unit is configured to: subsequent to receiving the response message of the second message from the second device, transmit a sharing confirmation response to the first device in a case where the response message of the second message indicates that the second device agrees to share the first connection and the relay device determines to share the third connection.

59. The relay device according to claim 57, wherein the first message is further used to request to establish a fourth connection between the first device and the relay device; and
the first communication unit is configured to: subsequent to receiving the response message of the second message from the second device, transmit a connection confirmation response to the first device in a case where the response message of the second message indicates that the second device agrees to share the first connection and the fourth connection has been established.

60. The relay device according to claim 48 or 49, wherein the first communication unit is configured to: subsequent to transmitting the second message to the second device, receive a response message of the second message from the second device, wherein the response message of the second message indicates whether the second connection has been established between the second device and the relay device.

61. The relay device according to claim 60, wherein the first message is further used to request to share a third connection between the first device and the relay device; and
the first communication unit is configured to: subsequent to receiving the response message of the second message from the second device, transmit a sharing confirmation response to the first device in a case where the response message of the second message indicates that the second connection has been established between the second device and the relay device and the relay device determines to share the third connection.

62. The relay device according to claim 58 or 61, wherein sharing confirmation response carries second state indication information of the third connection, wherein the second state indication information of the third connection is used by the first device to determine next time whether the third connection is in the shareable state.

63. The relay device according to claim 60, wherein the first message is further used to request to establish a fourth connection between the first device and the relay device; and the first communication unit is configured to: subsequent to receiving the response message of the second message from the second device, transmit a connection confirmation response to the first device in a case where the response message of the second message indicates that the second connection has been established between the second device and the relay device and the fourth connection has been established between the first device and the delay device.

64. The relay device according to claim 59 or 63, wherein the connection confirmation response carries state indication information of the fourth connection, wherein the state indication information of the fourth connection is used by the first device to determine next time whether the fourth connection is in the shareable state.

65. The relay device according to any one of claims 60 to 63, wherein in a case where the response message of the second message indicates that the second connection has been established between the second device and the relay device, the response message of the second message carries state indication information of the second connection, wherein the state indication information of the second connection is used by the relay device to determine whether the second connection is in a shareable state.

66. A first device, comprising:
a second communication unit configured to transmit a first message to a relay device, wherein the first message is used to request a connection between the first device and a second device, the first message is used to trigger the relay device to transmit a second message to the second device, wherein the second message is used to request to share a first connection to transmit data between the first device and the second device, or the second message is used to request to establish a second connection between the relay device and the second device to transmit data between the first device and the second device.

67. The first device according to claim 66, wherein the second communication unit is configured to transmit the first message to the relay device in a case where a third connection is present between the first device and the relay device and the third connection is in a shareable state, wherein the first message is further used to request to share the third connection.

68. The first device according to claim 66, wherein the second communication unit is configured to transmit the first message to the relay device in a case where a third connection is present between the first device and the relay device and the third connection is in a non-shareable state, wherein the first message is further used to request to establish a fourth connection between the first device and the relay device.

69. The first device according to claim 66, wherein the second communication unit is configured to transmit the first message to the relay device in a case where no connection is present between the first device and the relay device, wherein the first message is further used to request to establish a fourth connection between the first device and the relay device.

70. The first device according to any one of claims 66 to 69, wherein the first message carries information of a target service.

71. The first device according to any one of claims 66 to 70, wherein the third connection carries a target service.

72. The first device according to any one of claims 66 to 70, wherein the third connection does not carry a target service, and no connection is present between the first device and the relay device to carry the target service.

73. The first device according to any one of claims 67 to 72, further comprising:
a second processing unit configured to determine, based on first state indication information of the third connection, whether the third connection is in the shareable state.

74. The first device according to claim 73, wherein the second processing unit is configured to perform one of following operations: determining that the third connection is in the shareable state in a case where the first state indication information of the third connection comprises an indication that the third connection accepts sharing; determining that the third connection is in the shareable state in a case where the first state indication information of the third connection comprises a maximum quantity of target devices capable of sharing the third connection, and a quantity of target devices that have already shared the third connection is less than the maximum quantity; determining that the third connection is in the shareable state in a case where the first state indication information of the third connection comprises an indication that the quantity of target devices that have already shared the third connection does not reach the maximum quantity; or determining that the third connection is in the shareable state in a case where the first state indication information of the third connection comprises a second remaining quantity of target devices capable of sharing the third connection, and the second remaining quantity is not zero.

75. The first device according to claim 73, wherein the second processing unit is configured to perform one of following operations: determining that the third connection is in the shareable state in a case where the first state indication information of the third connection comprises an indication that a target service carried by the third connection accepts sharing; determining that the third connection is in the shareable state in a case where the first state indication information of the third connection comprises a maximum quantity of target devices capable of sharing the target service carried by the third connection, and a quantity of target devices that have already shared the target service carried by the third connection is less than the maximum quantity; determining that the third connection is in the shareable state in a case where the first state indication information of the third connection comprises an indication that the quantity of target devices that have already shared the target service carried by the third connection does not reach the maximum quantity; or determining that the third connection is in the shareable state in a case where the first state indication information of the third connection comprises a second remaining quantity of target devices capable of sharing the target service carried by the third connection, and the second remaining quantity is not zero.

76. The first device according to claim 67, wherein in a case where the second communication unit is configured to receive, subsequent to transmitting the first message to the relay device, a sharing confirmation response from the relay device, the second processing unit is configured to determine to share the third connection, and determine that a connection has been established between the first device and the second device.

77. The first device according to claim 76, wherein sharing confirmation response carries second state indication information of the third connection, wherein the second state indication information of the third connection is used by the first device to determine next time whether the third connection is in the shareable state.

78. The first device according to claim 68 or 69, wherein in a case where the second communication unit is configured to receive, subsequent to transmitting the first message to the relay device, a connection confirmation response from the relay device,
the second processing unit is configured to determine the establishment the fourth connection, and determine that a connection has been established between the first device and the second device.

79. The first device according to claim 78, wherein the connection confirmation response carries state indication information of the fourth connection, wherein the state indication information of the fourth connection is used by the first device to determine next time whether the fourth connection is in the shareable state.

80. A second device, comprising:
a third communication unit configured to receive a second message from a relay device, wherein the second message is used to request to share a first connection to transmit data between a first device and the second device, or the second message is used to request to establish a second connection between the relay device and the second device to transmit data between a first device and the second device.

81. The second device according to claim 80, wherein the second message carries information of a target service.

82. The second device according to claim 80 or 81, wherein the first connection carries a target service.

83. The second device according to claim 80 or 81, wherein the first connection does not carry a target service, and no connection is present between the relay device and the second device to carry the target service.

84. The second device according to any one of claims 80 to 83, wherein the second message is used to request to share the first connection to transmit the data between the first device and the second device; and
the third communication unit is configured to: subsequent to receiving the second message from the relay device, transmit a response message of the second message to the relay device, wherein the response message of the second message indicates whether the second device agrees to share the first connection, the response message of the second message carries second state indication information of the first connection, wherein the second state indication information of the first connection is used by the relay device to determine next time whether the first connection is in a shareable state.

85. The second device according to claim 84, wherein the third communication unit is configured to perform one of following operations: transmitting a response message of the second message to the relay device, the response message of the second message indicating that the second device agrees to share the first connection, in a case where the second device determines to share the first connection; or transmitting a response message of the second message to the relay device, the response message of the second message indicating that the second device rejects to share the first connection, in a case where the second device determines not to share the first connection.

86. The second device according to claim 84 or 85, wherein the second state indication information of the first connection comprises at least one of: an indication of whether the first connection accepts sharing; a maximum quantity of initiating devices capable of sharing the first connection; an indication of whether a quantity of initiating devices that have already shared the first connection reaches the maximum quantity; or a third remaining quantity of initiating devices capable of sharing the first connection.

87. The second device according to claim 85, further comprising:
a third processing unit configured to transmit, over the third communication unit, the response message the second message to the relay device, the response message of the second message indicating that the second device agrees to share the first connection, in a case where the first connection is determined to be shared and carrying of a target service is added on the first connection.

88. The second device according to claim 84 or 87, wherein the second state indication information of the first connection comprises at least one of: an indication of whether the target service carried by the first connection accepts sharing; a maximum quantity of initiating devices capable of sharing the target service carried by the first connection; an indication of whether a quantity of initiating devices that have already shared the target service carried by the first connection reaches the maximum quantity; or a third remaining quantity of initiating devices capable of sharing the target service carried by the first connection.

89. The second device according to any one of claims 80 to 83, wherein the second message is used to request to establish the second connection between the relay device and the second device to transmit the data between the first device and the second device; and
the third communication unit is configured to: subsequent to receiving the second message from the relay device, transmit a response message of the second message to the relay device, wherein the response message of the second message indicates whether the second connecton has been established between the second device and the relay device.

90. The second device according to claim 89, wherein in a case where the response message of the second message indicates that the second connecton has been established between the second device and the relay device, the response message of the second message carries state indication information of the second connection, wherein the state indication information of the second connection is used by the relay device to determine next time whether the second connection is in a shareable state.

91. A relay device, comprising a transceiver, a processor, and a memory, wherein the memory is configured to store a computer program, and the processor is configured to invoke and run the computer program stored in the memory, to cause the relay device to perform the communication method as defined in any one of claims 1 to 20.

92. A first device, comprising a transceiver, a processor, and a memory, wherein the memory is configured to store a computer program, and the processor is configured to invoke and run the computer program stored in the memory, to cause the first device to perform the communication method as defined in any one of claims 21 to 34.

93. A second device, comprising a transceiver, a processor, and a memory, wherein the memory is configured to store a computer program, and the processor is configured to invoke and run the computer program stored in the memory, to cause the second device to perform the communication method as defined in any one of claims 35 to 45.

94. A chip, comprising a processor configured to invoke and run a computer program in a memory, to cause a device equipped with the chip to perform the communication method as defined in any one of claims 1 to 20, claims 21 to 34, or claims 35 to 45.

95. A computer-readable storage medium, configured to store a computer program, wherein when the computer program is run by a device, the device is caused to perform the communication method as defined in any one of claims 1 to 20, claims 21 to 34, or claims 35 to 45.

96. A computer program product, comprising one or more computer program instructions, wherein the one or more computer program instructions, when executing by a computer, cause the computer to perform the communication method as defined in any one of claims 1 to 20, claims 21 to 34, or claims 35 to 45.

97. A computer program, wherein the computer program, when running by a computer, causes the computer to perform the communication method as defined in any one of claims 1 to 20, claims 21 to 34, or claims 35 to 45.
